(19) Europäisches Patentamt / European Patent Office / Office européen des brevets

(11) **EP 4 223 720 A2**

(12) **DEMANDE DE BREVET EUROPEEN**

(43) Date de publication:
**09.08.2023 Bulletin 2023/32**

(21) Numéro de dépôt: **23166198.4**

(22) Date de dépôt: **06.03.2020**

(51) Classification Internationale des Brevets (IPC):
**C04B 28/00** *(2006.01)*

(52) Classification Coopérative des Brevets (CPC):
(C-Sets disponibles)
**C04B 28/001;** Y02P 40/18          (Cont.)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA TN**

(30) Priorité: **06.03.2019 FR 1902304**

(62) Numéro(s) de document de la (des) demande(s) initiale(s) en application de l'article 76 CBE:
**20725850.0 / 3 793 961**

(71) Demandeur: **Materrup**
**40230 Saint-Geours-de-Maremne (FR)**

(72) Inventeurs:
• **MERCE, Manuel**
**40230 Benesse Maremne (FR)**
• **NEUVILLE, Mathieu**
**40140 Soustons (FR)**

(74) Mandataire: **A.P.I. Conseil**
**Immeuble Newton**
**4, rue Jules Ferry**
**64000 Pau (FR)**

Remarques:
Cette demande a été déposée le 31-03-2023 comme demande divisionnaire de la demande mentionnée sous le code INID 62.

(54) **PROCÉDÉ DE SÉLECTION DE LA COMPOSITION D'UN MATÉRIAU DE CONSTRUCTION COMPORTANT UNE TERRE ARGILEUSE EXCAVÉE, PROCÉDÉ ET UN SYSTÈME DE PRÉPARATION D'UN TEL MATÉRIAU DE CONSTRUCTION**

(57)    L'invention porte sur un procédé (100) de sélection de la composition d'un matériau de construction comportant une terre argileuse excavée, ladite composition de matériau de construction devant comporter des quantités d'agent défloculant et d'agent d'activation adaptées à la terre argileuse excavée, ledit procédé comportant une étape de réception (130) d'une valeur mesurée d'au moins une propriété physicochimique d'une terre argileuse excavée et une étape de sélection (170), d'une quantité d'agent défloculant et d'une quantité d'agent d'activation adaptées à la terre argileuse excavée. En outre, l'invention porte également sur un procédé (200) de calibrage d'un algorithme de calcul pour la détermination de la composition d'un matériau de construction de site, sur un matériau de construction formé à partir d'une terre argileuse excavée et sur un système (400) de préparation d'un matériau de construction comportant une terre argileuse excavée.

FIG. 6

EP 4 223 720 A2

(52) Classification Coopérative des Brevets (CPC):
(Cont.)

C-Sets
**C04B 28/001, C04B 12/04, C04B 22/062,
C04B 2103/402, C04B 2103/406;
C04B 28/001, C04B 12/04, C04B 22/10,
C04B 24/003, C04B 24/023, C04B 24/122,
C04B 24/18, C04B 24/2641, C04B 2103/0094;
C04B 28/001, C04B 12/04, C04B 22/10,
C04B 24/003, C04B 24/023, C04B 24/122,
C04B 24/18, C04B 24/2641, C04B 2103/10;
C04B 28/001, C04B 14/303, C04B 22/06,
C04B 2103/402, C04B 2103/406;
C04B 28/001, C04B 18/141, C04B 22/16,
C04B 24/24;
C04B 28/001, C04B 18/141, C04B 22/16,
C04B 2103/402, C04B 2103/406;
C04B 28/001, C04B 2103/0081,
C04B 2103/0094;
C04B 28/001, C04B 2103/0081, C04B 2103/10;
C04B 28/001, C04B 2103/0094, C04B 2103/408;
C04B 28/001, C04B 2103/10, C04B 2103/408**

**Description**

L'invention s'intéresse au domaine des matériaux de construction, et plus particulièrement celui des matériaux pouvant être utilisés en construction tels que des liants de construction ou des bétons. L'invention concerne un procédé de sélection de la composition d'un matériau de construction comportant une terre argileuse excavée. L'invention concerne également un procédé de calibrage d'un algorithme de calcul pour la détermination de la composition d'un matériau de construction de site comportant de la terre argileuse excavée, sur un matériau de construction formé à partir d'une terre argileuse excavée et sur un système de préparation d'un matériau de construction comportant une terre argileuse excavée.

[Art antérieur]

Le ciment est la deuxième ressource la plus consommée au monde, avec plus de 4 milliards de tonnes de matériaux produits chaque année dans le monde et cette consommation est en constante augmentation portée par la demande croissante de logements et d'infrastructures. Le ciment est un liant, généralement hydraulique, qui mélangé à de l'eau durcit et prend en masse. Après durcissement, le ciment conserve sa résistance ainsi que sa stabilité et cela même exposé à l'eau. Il existe une grande variété de ciments utilisés par le monde. En outre, les procédés de préparation du ciment sont de plus en plus perfectionnés et ont été développé des systèmes automatisés pour la préparation de divers bétons (FR2751911, EP2296854). Néanmoins tous les ciments conventionnels comportent un clinker à un pourcentage variant de 5 % pour certains ciments de hauts fourneaux à un minimum de 95 % pour le ciment Portland qui est le ciment aujourd'hui le plus utilisé par le monde. Le clinker résulte de la cuisson d'un mélange composé d'environ 80 % de calcaire et de 20 % d'aluminosilicates (tels que des argiles). Cette cuisson, la clinkérisation, se fait à une température de plus de 1200°C, un tel processus de préparation de ciments implique donc une forte consommation énergétique. De plus, la conversion chimique du calcaire en chaux libère également du dioxyde de carbone. En conséquence, l'industrie du ciment génère environ 8% des émissions mondiales de $CO_2$. Face à ce défi, l'industrie et les chercheurs étudient les possibilités de réduire l'impact des émissions de dioxyde de carbone générées par l'industrie du ciment.

Il a par exemple été proposé des matériaux à base de déchets de production animale, tel que le fumier (DE19530964). Ces matériaux prenaient principalement la forme de matériau isolant destiné à être intégré dans une structure ou utilisé en tant que matériau de construction quand celui-ci est additionné à du ciment et/ou du limon. Il a également été proposé, il y a près de 100 ans, un procédé de production de matériaux de construction non cuits à partir d'argile avec addition de matériaux poreux absorbant l'eau tels que de la tourbe, des algues marines, du feuillage, des aiguilles ou de la sciure de bois (DE354069). Enfin, il a été proposé des matériaux de construction produits à partir d'argile non calciné comprenant de l'argile, de la chaux, du laitier de haut fourneau, un composé alcalin, un floculant et de l'eau (WO03/089383). De plus à ces émissions de carbones vient s'ajouter dans le cadre de grands projets d'aménagement urbain la gestion des terres excavées. Ces terres excavées sont généralement stockées ou utilisées pour des comblements de carrières ou des aménagements de parcs mais cela représente un potentiel d'utilisation bien inférieur aux volumes disponibles. En outre, il a été proposé d'utiliser ces terres excavées pour de la fabrication de matériaux de construction néanmoins cette application se heurte aux problématiques de résistance mécanique insuffisante des constructions en terre crue d'une part et à l'empreinte carbone non optimale lors de l'utilisation de métakaolin.

En effet, les ciments proposés à base de terre crue, tels que décrits dans le document FR3016376, présentent soit des propriétés physiques, telle que l'amélioration de la résistance mécanique, la réduction de l'absorption capillaire, ou encore la réduction de la perméabilité aux liquides, trop faibles ; soit ils nécessitent l'ajout d'une portion de ciment Portland pour pouvoir présenter des propriétés mécaniques acceptables.

Concernant les ciments à base de métakaolin, le mélange de chaux ou d'hydroxyde de sodium et de métakaolin lors de l'hydratation du ciment va induire une réaction pouzzolanique. Cette réaction améliore les propriétés liantes des ciments à base de métakaolin. Du fait de ces propriétés, il a été proposé des matériaux de construction à base de metakaolin comportant notamment un métakaolin flashé associé à de l'hydroxyde de sodium, tel que décrit dans le document FR3034094. Néanmoins, la formation de métakaolin nécessite un traitement thermique d'argiles kaolinitiques pour conduire à la déshydroxylation de la structure cristalline de la kaolinite induisant un bilan carbone défavorable notamment lors de la prise en compte du transport des terres excavées vers les unités thermiques.

Ainsi, il existe un besoin pour de nouvelles utilisations de terre argileuse excavée pouvant avantageusement permettre une réduction des émissions de gaz à effet de serre et la préparation de matériau de construction tel qu'un liant de construction ou un béton de site présentant une faible empreinte carbone tout en présentant des propriétés mécaniques au moins équivalentes voire supérieures aux propriétés mécaniques des ciments couramment utilisés dans le domaine de la construction.

**[Problème techniauel]**

L'invention a donc pour but de remédier aux inconvénients de l'art antérieur. En particulier, l'invention a pour but de proposer un procédé de sélection de la composition d'un matériau de construction comportant une terre argileuse excavée, ledit procédé permettant de former un matériau de construction, tel qu'un liant de construction, permettant de diminuer l'émission de gaz à effets de serre d'une part, tel que le dioxyde de carbone, tout en conférant des caractéristiques mécaniques adaptées à son utilisation dans le domaine de la construction et d'autre part de proposer un béton de site comportant un tel liant et capable d'améliorer le confort des habitants par rapport à un béton formé à partir de ciment Portland.

L'invention a en outre pour but de proposer un matériau de construction formé à partir d'une terre argileuse excavée aux propriétés mécaniques adaptées à son utilisation dans le domaine de la construction tout en constituant une voie de valorisation des terres argileuses excavées.

L'invention a en outre pour but de proposer un procédé et un système de préparation d'un matériau de construction comportant une terre argileuse excavée permettant de diminuer l'émission de gaz à effets de serre par rapport à un matériau de construction conventionnel de type ciment Portland.

**[Brève description de l'invention]**

A cet effet, l'invention porte sur un procédé de sélection de la composition d'un matériau de construction comportant une terre argileuse excavée, ladite composition de matériau de construction devant comporter des quantités d'agent défloculant et d'agent d'activation adaptées à la terre argileuse excavée, ledit procédé étant mis en oeuvre par un dispositif informatique comportant un module de calcul, ledit procédé comportant :

- Une étape de réception, par le module de calcul, d'une valeur mesurée d'au moins une propriété physicochimique d'une terre argileuse excavée ; et
- Une étape de sélection, par le module de calcul, d'une quantité d'agent défloculant et d'une quantité d'agent d'activation adaptées à la terre argileuse excavée sur la base d'une comparaison de la ou des valeurs mesurées à des valeurs de référence, lesdites valeurs de références comportant des corrélations entre des valeurs mesurées d'au moins une propriété physicochimique d'une terre argileuse et des quantités d'agent défloculant et d'agent d'activation adaptées à ladite terre argileuse pour former un matériau de construction.

Un tel procédé de sélection présente l'avantage de pouvoir sélectionner au moins une partie des constituants d'un matériau de construction à base de terre argileuse excavée de façon à former un matériau de construction, tel qu'un liant de construction ou un béton de site, aux propriétés mécaniques équivalentes aux propriétés mécaniques des matériaux de construction conventionnels utilisant des clinkers. En effet, avec les méthodes de l'art antérieur, les matériaux de constructions obtenus à partir de terre excavée ne sont généralement pas suffisamment performants d'un point de vu mécanique pour permettre une large utilisation.

En outre, les constituants sélectionnés via le procédé de sélection (i.e. terre argileuse excavée, agent défloculant et agent d'activation) permettent la formation d'un matériau de construction selon un procédé de préparation moins énergivore.

Enfin, le matériau de construction comportant une terre excavée argileuse n'ayant de préférence pas subi d'étape de combustion, il conserve des propriétés hygrothermiques avantageuses permettant d'améliorer le confort des habitants par rapport à un béton formé à partir de ciment Portland.

**Selon d'autres caractéristiques optionnelles du procédé de** sélection :

- l'au moins une propriété physicochimique est sélectionnée parmi : la teneur en argiles dans la terre argileuse excavée, la nature des argiles, la granulométrie, la teneur en impuretés, la teneur de fractions minéralogiques non argileuse, la teneur en pollutions, l'analyse élémentaire, la teneur en oxydes métalliques, la salinité, le pH, et la capacité totale d'échange de l'argile de la terre argileuse excavée. De préférence, l'au moins une propriété physicochimique est sélectionnée parmi : la teneur en argiles dans la terre argileuse excavée, la nature des argiles, la granulométrie, la teneur de fractions minéralogiques non argileuse, l'analyse élémentaire, la teneur en oxydes métalliques, la salinité, le pH, et la capacité totale d'échange de l'argile de la terre argileuse excavée. De façon plus préférée, l'au moins une propriété physicochimique est sélectionnée parmi : la teneur en argiles dans la terre argileuse excavée, la nature des argiles, la granulométrie, la teneur de fractions minéralogiques non argileuse, la teneur en oxydes métalliques, et la capacité totale d'échange de l'argile de la terre argileuse excavée. De telles propriétés physicochimiques sont les plus à même de fournir des valeurs d'agent défloculant et d'agents d'activation adaptées à la terre argileuse excavées considérée.

- l'au moins une propriété physicochimique est mesurée sur une terre argileuse excavée prétraitée, ledit prétraitement étant sélectionné parmi : broyage, triage, tamisage et/ou séchage de la terre argileuse excavée. Cela permet avantageusement de minimiser l'erreur sur les mesures réalisées. De préférence, le prétraitement comporte au moins un fractionnement, par exemple par tamisage ou sédimentation, de façon plus préférée un fractionnement à 50 $\mu$m et par exemple un fractionnement à 20 $\mu$m.

- Il comprend au préalable la réception d'une valeur de propriété mécanique souhaitée du matériau de construction et l'étape de sélection des quantités d'agent défloculant et d'agent d'activation comporte en outre une exclusion des quantités d'agent défloculant et d'agent d'activation qui ne permettront pas au matériau de construction de présenter la valeur de propriété mécanique souhaitée. Ainsi, un opérateur peut aisément fixer un critère objectif de performance pour le matériau de construction dont la composition est attendue. Il y a donc un gain de temps et de performance dans le cadre d'un processus de valorisation de terre excavée pour une application de construction.

- l'étape de sélection, par le module de calcul, d'une quantité d'agent défloculant et d'une quantité d'agent d'activation adaptées à la terre argileuse excavée comporte la mise en oeuvre d'un algorithme de calcul préalablement calibré.

- l'algorithme de calcul préalablement calibré a été obtenu par la mise en oeuvre d'une méthode statistique d'apprentissage supervisé.

Selon **un autre aspect,** l'invention porte en outre sur un **procédé de calibrage** d'un algorithme de calcul pour la détermination de la composition d'un matériau de construction, tel qu'un liant de construction ou un béton de site, par exemple mis en oeuvre par un dispositif numérique comportant un module d'apprentissage, caractérisé en ce qu'il comporte :

- Une première étape de réception, par le module d'apprentissage, d'une valeur mesurée d'au moins une propriété physicochimique d'une terre argileuse excavée ;
- Une deuxième étape de réception, par le module d'apprentissage, d'une valeur de quantité d'agent défloculant et d'une valeur de quantité d'agent d'activation qui une fois ajoutées à la terre argileuse excavée permettent de former un matériau de construction ;
- Une troisième étape de réception, par le module d'apprentissage, d'une valeur mesurée d'au moins une propriété mécanique du matériau de construction formé à partir de la terre argileuse excavée dont la valeur d'au moins une propriété physicochimique a été réceptionné lors de la première étape de réception, et à partir des quantités d'agent défloculant et d'agent d'activation réceptionnées lors de la deuxième étape de réception ; et
- Une étape de création d'une corrélation, par le module d'apprentissage, entre les valeurs mesurées réceptionnées de façon à calibrer un algorithme de calcul.

La combinaison de terre argileuse excavée, agent défloculant et agent d'activation permet de réaliser un matériau de construction aux propriétés mécaniques appréciables et le procédé de sélection selon l'invention permet la sélection des valeurs de quantité adéquates. Toutefois, considérant la complexité et la variabilité des propriétés physicochimiques des terres argileuses excavées, les inventeurs ont mis au point un procédé de calibrage d'un algorithme de calcul permettant de passer outre cette complexité. Un tel procédé de calibrage permet de pouvoir proposer des valeurs de quantité d'agent défloculant et d'agent d'activation hautement adaptées à la terre argileuse excavée. A noter que l'ordre de réception n'importe peu et permet de clarifier la description du procédé.

Selon un **autre aspect,** l'invention porte en outre sur un **procédé de préparation** d'un matériau de construction à partir d'une terre argileuse excavée, le procédé comportant :

- Une étape de mesure d'au moins propriété physicochimique de la terre argileuse excavée ;
- Une étape de sélection selon un procédé de sélection de la composition d'un matériau de construction comportant une terre argileuse excavée selon l'invention ; et
- Une étape de mélange de terre argileuse excavée, d'agent défloculant et d'agent d'activation selon la composition sélectionnée.

Un tel procédé, simple et rapide, permet de diminuer l'émission de gaz à effets de serre lors de sa mise en oeuvre par rapport à la mise en oeuvre d'un procédé de préparation d'un matériau de construction conventionnel de type ciment Portland.

**Selon d'autres caractéristiques optionnelles du procédé de préparation, il comporte en outre** :

◦ une étape de mesure de propriété physico-chimique ou mécaniques du matériau de construction en formation, pendant l'étape de mélange,

◦ une étape de comparaison des valeurs mesurées à des valeurs prédéterminées de propriété physicochimique ou mécanique du matériau de construction en formation, et

◦ lorsque les valeurs mesurées diffèrent des valeurs prédéterminées de propriété physicochimique ou mécanique du matériau de construction en formation, une étape d'ajout d'au moins un ingrédient complémentaire.

Ainsi, la vérification des propriétés du matériau de construction en formation permet de réaliser un contrôle qualité en ligne, c'est-à-dire de préférence en temps réel, de façon à s'assurer que le matériau de construction formé présentera les propriétés mécaniques les plus proches possibles des propriétés mécaniques attendues. En effet, une déviation peut être identifiée au moment du mélange et corrigée avant que le matériau de construction ne soit finalisé et a *fortiori* utilisé.

Selon un autre aspect, l'invention porte sur un produit programme d'ordinateur configuré pour exécuter un procédé de sélection selon l'invention.

Selon un autre aspect, l'invention porte sur un produit programme d'ordinateur configuré pour exécuter un procédé de calibrage selon l'invention.

Selon **un autre aspect,** l'invention porte en outre sur un **matériau de construction formé à partir d'une terre argileuse excavée** caractérisé en ce qu'il comporte un agent défloculant et une terre argileuse excavée. De préférence, l'invention porte en outre sur un **matériau de construction formé à partir d'une terre argileuse excavée** caractérisé en ce qu'il comporte une terre argileuse excavée, un agent d'activation et un agent défloculant, ledit agent défloculant représentant au moins 0,1 % en poids du matériau de construction, de préférence au moins 0,25 % en poids du matériau de construction.

L'agent d'activation n'est pas systématiquement retrouvé dans le liant de construction ou dans le béton de site car il peut réagir avec des constituants de la terre argileuse excavée et être transformé. Néanmoins, dans certains cas, un matériau de construction selon l'invention, formé à partir d'une terre argileuse excavée, peut en outre comporter un agent d'activation.

Un tel matériau de construction formé à partir d'une terre argileuse excavée présente des propriétés mécaniques adaptées à son utilisation dans le domaine de la construction tout en constituant une voie de valorisation des terres argileuses excavées.

Selon d'autres caractéristiques optionnelles du matériau de construction selon l'invention, il comporte un mélange de différents types d'argiles.

En outre, il peut comporter au moins 2 % en poids de particules de limon, de préférence au moins 4 % en poids, de façon plus préférée au moins 6 % en poids. Les particules de limon sont en particulier des particules présentant un diamètre compris entre 2 $\mu$m et 50 $\mu$m.

Un matériau de construction selon l'invention peut comporter des oxydes métalliques à une teneur d'au moins 2 % en poids du matériau de construction.

Un matériau de construction conforme à l'invention peut en outre comporter des laitiers de hauts fourneaux.

Un matériau de construction selon l'invention peut comporter de 30 % à 80 % en poids de terre argileuse excavée, de 0,1 % à 10 % en poids d'agent défloculant, et de 5 à 10 % en poids de laitiers de hauts fourneaux. Dans ce cas, le matériau de construction correspond de préférence à un liant de construction.

Un matériau de construction selon l'invention peut comporter :

- entre 5 et 20% en poids d'argile crue provenant de la terre argileuse excavée ;
- entre 0,1 et 3 % en poids d'agent défloculant ;
- entre 3 et 15 % en poids d'un agent d'activation ;
- entre 25 et 45 % en poids de sable ; et
- entre 35 et 55 % en poids de granulats ;

ledit matériau de construction correspondant alors de préférence à un béton de site.

Comme cela est présenté dans les exemples les matériaux de construction selon l'invention présentent une amélioration des performances mécaniques.

En outre, la terre argileuse excavée peut avantageusement avoir été prétraitée, ledit prétraitement étant sélectionné parmi : broyage, triage, tamisage et/ou séchage de la terre argileuse excavée. Le prétraitement peut par exemple comporter un fractionnement.

Selon un autre aspect, l'invention porte sur un procédé de préparation d'un matériau de construction selon l'invention à partir d'une terre argileuse excavée comportant :

- une étape d'excavation d'une terre argileuse ;
- éventuellement une étape de criblage de la terre argileuse excavée lorsque la terre argileuse excavée comporte des pierres retenues par un criblage à 2 cm ; et

- une étape de mélange 340 de terre argileuse excavée, de préférence la fraction inférieure à 50 $\mu$m, d'agent défloculant et d'agent d'activation.

Selon un **autre aspect,** l'invention porte en outre sur un **système de préparation d'un matériau de construction** comportant une terre argileuse excavée, ledit système comportant :

- Au moins un contenant comportant une terre argileuse excavée ;
- Au moins un contenant comportant un agent défloculant ;
- Au moins un contenant comportant un agent d'activation ;
- Un dispositif de mélange, avec des moyens de transports automatisés entre les contenants et le dispositif de mélange ;
- Un module de contrôle configuré pour générer des signaux de sortie à destination des moyens de transports automatisés de façon transporter des quantités d'agent défloculant et d'agent d'activation déterminées vers le dispositif de mélange.

Avantageusement, le système de préparation d'un matériau de construction selon l'invention comporte un moyen de communication configuré pour recevoir des données sur une quantité d'agent défloculant et une quantité d'agent d'activation déterminées, adaptées à la terre argileuse excavée ; le module de contrôle étant configuré pour générer des signaux de sortie à destination des moyens de transports automatisés de façon transporter les quantités d'agent défloculant et d'agent d'activation déterminées vers le dispositif de mélange.

De façon préférée, le système de préparation d'un matériau de construction selon l'invention comporte : Un moyen de mesure d'au moins une propriété physicochimique de la terre argileuse excavée, Un moyen de calcul apte à mettre en oeuvre un programme informatique configuré pour réaliser : Une étape d'obtention d'une valeur mesurée d'au moins une propriété physicochimique de la terre argileuse excavée ; et Une étape de détermination d'une quantité d'agent défloculant et d'une quantité d'agent d'activation adaptées à la terre argileuse excavée sur la base d'une comparaison de la ou des valeurs mesurées à des valeurs de référence.

En particulier, l'invention porte en outre sur un **système de préparation d'un matériau de construction** comportant une terre argileuse excavée, ledit système comportant :

- Au moins un contenant comportant une terre argileuse excavée ;
- Au moins un contenant comportant un agent défloculant ;
- Au moins un contenant comportant un agent d'activation ;
- Un dispositif de mélange, avec des moyens de transports automatisés entre les contenants et le dispositif de mélange ;
- Un moyen de mesure d'au moins une propriété physicochimique de la terre argileuse excavée ;
- Un moyen de calcul apte à mettre en oeuvre un programme informatique configuré pour réaliser :

  ◦ Une étape d'obtention d'une valeur mesurée d'au moins une propriété physicochimique de la terre argileuse excavée, et
  ◦ Une étape de détermination d'une quantité d'agent défloculant et d'une quantité d'agent d'activation adaptées à la terre argileuse excavée sur la base d'une comparaison de la ou des valeurs mesurées à des valeurs de référence ; et

- Un module de contrôle configuré pour générer des signaux de sortie à destination des moyens de transports automatisés de façon transporter les quantités d'agent défloculant et d'agent d'activation déterminées vers le dispositif de mélange.

Un tel système permet de façon automatisée de former un liant de construction ou éventuellement un béton de site (avec ajout de charges) à partir de terre argileuse excavée, ces matériaux de constructions présentant des propriétés mécaniques équivalentes aux propriétés mécaniques de matériaux conventionnels présentant une empreinte carbone bien supérieure.

D'autres avantages et caractéristiques de l'invention apparaitront à la lecture de la description suivante donnée à titre d'exemple illustratif et non limitatif, en référence aux Figures annexées :

[Fig 1] représente les étapes d'un procédé de sélection de la composition d'un matériau de construction comportant une terre argileuse excavée selon un mode de réalisation de la présente invention. Les étapes en pointillées sont facultatives.

[Fig 2] représente les étapes d'un procédé de calibrage d'un algorithme de calcul pour la détermination de la composition d'un matériau de construction de site. Les étapes en pointillées sont facultatives.

[Fig 3] représente les étapes d'un procédé de préparation d'un matériau de construction à partir d'une terre argileuse excavée. Les étapes en pointillées sont facultatives.

[Fig 4] représente un procédé de préparation d'un matériau de construction selon un mode de réalisation de l'invention.

[Fig 5] représente un procédé de préparation d'un matériau de construction selon un mode de réalisation de l'invention. Les étapes en pointillées sont facultatives.

[Fig 6] représente un schéma montrant une architecture fonctionnelle du système de préparation d'un matériau de construction comportant une terre argileuse excavée selon l'invention. Les flèches en trait plein représentent des moyens de transport et les flèches en pointillées des transferts de données ou des instructions, notamment audits moyens de transport.

Des aspects de la présente invention sont décrits en référence à des organigrammes et / ou à des schémas fonctionnels de procédés, d'appareils (systèmes) et de produits de programme d'ordinateur selon des modes de réalisation de l'invention. Sur les figures, les organigrammes et les schémas fonctionnels illustrent l'architecture, la fonctionnalité et le fonctionnement d'implémentations possibles de systèmes, de procédés et de produits de programme d'ordinateur selon divers modes de réalisation de la présente invention.

A cet égard, chaque bloc dans les organigrammes ou blocs-diagrammes peut représenter un système, un dispositif, un module ou un code, qui comprend une ou plusieurs instructions exécutables pour mettre en oeuvre la ou les fonctions logiques spécifiées. Dans certaines implémentations, les fonctions associées aux blocs peuvent apparaître dans un ordre différent que celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et / ou de l'organigramme, et des combinaisons de blocs dans les schémas de principe et / ou l'organigramme, peuvent être mis en oeuvre par des systèmes matériels spéciaux qui exécutent les fonctions ou actes spécifiés ou effectuer des combinaisons de matériel spécial et d'instructions informatiques.

## [Description de l'invention]

Dans la suite de la description, l'expression « **terre argileuse** », doit être comprise comme correspondant à une terre issue d'un sol comportant des argiles, ou plus généralement d'une formation meuble à granulométrie fine, et donc comportant un ou plusieurs matériaux rocheux à base de silicates ou d'aluminosilicates hydratés de structure lamellaire. En particulier, une terre argileuse peut par exemple correspondre à des sols de type limon sablo-argileux, des sols argilo-limoneux, des sols argilo-sablonneux, des sols argileux. De préférence une terre argileuse comporte au moins 25 % en poids d'argile, de préférence au moins 30 % en poids d'argile, de façon plus préférée au moins 40 % en poids d'argile. La teneur en poids d'argile peut être déterminée par des méthodes standard de l'art antérieur telle que la méthode granulométrique décrit dans la norme NF X31-107. En outre, de préférence, une terre argileuse dans le cadre de l'invention comporte au plus 95 % en poids d'argile, de préférence au plus 90 % en poids d'argile, de façon plus préférée au moins 80 % en poids d'argile.

L'expression « **terre argileuse excavée** » correspond au sens de l'invention à une terre argileuse obtenue suite à une étape où le sol a été creusé par exemple au cours d'opérations de régalements et/ou de terrassements, en vue de construire, bâtir ou remblayer. En particulier, au sens de l'invention, la terre argileuse excavée peut être ou non déplacée hors du site de production. De façon préférée et selon un avantage de l'invention, la terre excavée est utilisée sur le site de production ou à une distance inférieure à 200 km. En outre, avantageusement, la terre argileuse excavée dans le cadre de l'invention est une terre argileuse excavé crue, c'est-à-dire qu'elle n'a pas subi d'étape de calcination. En particulier, c'est-à-dire qu'elle n'a fait l'objet d'aucun traitement thermique préalable. Par exemple, cela correspond à une terre argileuse n'ayant pas subi une montée en température supérieure à 300°C, de préférence supérieure à 200°C et plus préférentiellement une température supérieure à 150°C. En effet, la terre argileuse crue peut subir une étape de chauffage nécessitant une montée en température généralement de sensiblement égale à 150°C mais pas d'étape de calcination. L'argile telle qu'utilisée conventionnellement présente un profil granulométrique relativement constant avec des tailles inférieures à 2 $\mu$m. Une terre argileuse excavée peut présenter différents profils granulométriques. Dans le cadre de l'invention, une terre argileuse excavée pourra comporter des particules de taille supérieure à 2 $\mu$m, de préférence supérieure à 20 $\mu$m, de préférence supérieure à 50 $\mu$m et par exemple supérieure à 75 $\mu$m telle

que déterminée selon la norme ASTM D422-63. De préférence, la terre argileuse excavée ne comporte pas de granulat de taille supérieure à 2 cm telle que déterminée selon la norme NF EN 933-1.

L'expression « % **en poids** » en lien avec la terre argileuse excavée, la composition, le liant ou le béton de site doit être compris comme étant une proportion par rapport au poids sec de la composition, du liant ou du béton de site. Le poids sec correspond au poids avant l'addition d'eau par exemple nécessaire à la formation d'un matériau de construction.

L'expression « **matériau de construction** » au sens de la présente invention correspond à un liant de construction ou à un béton de site. Le béton de site comportera en particulier des charges telles que des granulats et/ou du sable.

On entend par « **agent défloculant** », tout composé, qui, en suspension aqueuse, va dissocier des agrégats et des colloïdes. Les agents défloculant ont par exemple été utilisés dans un contexte de forage ou d'extraction pétrolière pour rendre l'argile plus fluide et faciliter l'extraction ou le forage.

On entend par « **agent d'activation** », toute composition ayant pour fonction d'accélérer la dispersion d'une source d'aluminosilicate favorisant la formation d'hydrates stables à faible solubilité et la formation d'une structure compacte avec ces hydrates, augmentant ainsi la résistance mécanique des matériaux incorporant une telle composition d'activation.

Le terme « granulométrie » au sens de l'invention correspond à la répartition des éléments et particules de la terre argileuse en fonction de l'importance pondérale relative des différentes classes de particules, identifiées par leur taille et constituant le squelette minéral du sol. Cinq classes granulométriques existent : - Les argiles (0 à 2 micromètres) - Les limons fins (2 à 20 micromètres) - Les limons grossiers (20 à 50 micromètres) - Les sables fins (50 à 200 micromètres) - Les sables grossiers (200 à 2000 micromètres).

L'expression « **nature des argiles** » correspond au sens de l'invention aux propriétés chimiques et/ou minéralogiques des argiles. Cela correspond en particulier à la composition chimique des argiles mais aussi à leur minéralogie et leurs caractéristiques physiques (telles que la surface spécifique, la porosité, la morphologie). Par exemple cela peut correspondre à l'identification de l'argile par sa dénomination usuelle (e.g. kaolinite, illite, Montmorillonite, Smectite, Bentonite, Chlorite et Vermiculite).

L'expression « **éléments-traces métalliques** » correspond au sens de l'invention aux éléments chimiques métalliques et en particulier ils correspondent au sens de l'invention aux métaux sélectionnées parmi : le fer, le plomb, le mercure, l'uranium, le chrome, le cuivre, le cadmium, l'argent, l'or, le zinc, le nickel ou le titane.

Le terme « **sensiblement égale** » au sens de l'invention correspond à une valeur variant de moins de 20 % par rapport à la valeur comparée, de préférence de moins de 10 %, de façon encore plus préférée de moins de 5 %.

Par « modèle » ou « règle » ou « **algorithme de calcul** », il faut comprendre au sens de l'invention une suite finie d'opérations ou d'instructions permettant de sélectionner des valeurs de quantité d'agent défloculant et d'agent d'activation, c'est-à-dire par exemple de former des groupes préalablement définis Y associé à des scores ou des catégories en fonction de corrélation avec des quantités d'agent défloculant D et d'agent d'activation A d'une part et une ou plusieurs valeurs de propriétés physicochimiques de terre argileuse excavée E. La mise en oeuvre de cette suite finie d'opérations permet par exemple d'attribuer une étiquette $Y_0$ à une observation décrite par un ensemble de caractéristiques $D_0$, $A_0$, $E_0$, grâce par exemple à la mise en oeuvre d'une fonction f susceptible, de reproduire Y ayant observé D, A et E.

$$Y = f(D,A,E) + e$$

où e symbolise le bruit ou erreur de mesure.

Ici Y peut par exemple être la capacité (oui/non) à former un matériau de construction.

Avantageusement, l'algorithme de calcul peut établir des groupes préalablement définis, associer d'autres valeurs telles que des valeurs de propriétés mécaniques M du matériau de construction pouvant être formé à partir de ces quantités. Ainsi avec la formule « M = f(D,A,E) + e » il est possible de sélectionner des valeurs de quantité permettant de former des matériaux de construction présentant des propriétés mécaniques prédéterminées.

Par « **méthode de d'apprentissage supervisé** », on entend au sens de l'invention un procédé permettant de définir une fonction f à partir d'une base de n observations étiquetées $(X_{1...n}, Y_{1...n}, D_{1...n}, , A_{1...n}, , E_{1...n})$ où par exemple Y = f (D,A,E) + e ou M = f (D,A,E) + e.

On entend par « **traiter** », « **calculer** », « **déterminer** », « **afficher** », « **extraire** » « **comparer** » ou plus largement « **opération exécutable** », au sens de l'invention, une action effectuée par un dispositif ou un processeur sauf si le contexte indique autrement. À cet égard, les opérations se rapportent à des actions et / ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. En particulier, des opérations de calcul sont effectuées par le processeur du dispositif, les données produites sont inscrites dans un champ correspondant dans une mémoire de données et ce ou ces champs peuvent être restitués à un utilisateur par exemple au travers d'une Interface Homme Machine adaptée, tels qu'à titre d'exemples non limitatifs un écran d'un objet connecté, mettant en forme de telles données. Ces opérations peuvent se baser sur des applications ou des logiciels.

Les termes ou expressions « **application** », « **logiciel** », « **code de programme** », et « **code exécutable** » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçue pour l'exécution sur un système informatique.

On entend par « **processeur** », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (« ASIC » selon une terminologie anglo-saxonne) et un circuit logique programmable. Un seul processeur ou plusieurs autres unités peuvent être utilisées pour mettre en oeuvre l'invention.

On entend par « **couplé** », au sens de l'invention, connecté, directement ou indirectement avec un ou plusieurs éléments intermédiaires. Deux éléments peuvent être couplés mécaniquement, électriquement ou liés par un canal de communication.

L'expression « **interface homme-machine** » au sens de l'invention correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

Dans les revendications, le terme **"comprendre"** ou **"comporter"** n'exclut pas d'autres éléments ou d'autres étapes.

Dans la suite de la description, les mêmes références sont utilisées pour désigner les mêmes éléments. Les signes de référence ne sauraient être compris comme limitant la portée de l'invention. En outre, les différentes caractéristiques présentées et/ou revendiquées peuvent être avantageusement combinées. Leur présence dans la description ou dans des revendications dépendantes différentes, n'excluent pas cette possibilité.

Comme cela a été évoqué, le constat actuel est que les terres excavées sont nombreuses, souvent considérées comme des déchets et constituent alors, lors d'aménagement de site, une charge supplémentaire pour les promoteurs. Cette gestion et notamment la pollution pouvant être engendrée par le transport de ces terres excavées s'ajoute à la pollution engendrée par la préparation de ciment conventionnel (e.g. Portland).

Face à ce constat, les inventeurs ont identifié un procédé de sélection d'une composition pour un matériau de construction utilisant de la terre argileuse excavée et permettant d'obtenir un liant de construction aux propriétés mécaniques similaires aux propriétés mécaniques du ciment conventionnel (e.g. Portland). A partir de ce procédé, ils sont capables, comme cela sera présenté dans les exemples, de générer un liant de construction qui pourrait être avantageusement, mais non limitativement, utilisée en remplacement du ciment Portland, de la chaux ou du CSA. Ainsi, le déchet (i.e. terre argileuse excavée) combiné dans des proportions particulières avec un agent défloculant et un agent d'activation, peut devenir une matière première dans un procédé de construction.

En outre, étant donné son procédé de préparation d'une part et l'utilisation de terre argileuse excavée, le matériau de construction selon l'invention présente l'avantage de posséder une empreinte carbone au moins deux fois plus basse que la plupart des matériaux de construction, ou liant hydraulique, les plus utilisés au monde aujourd'hui (i.e. Ciment Portland). En effet, un matériau de construction selon l'invention est principalement constitué d'une terre argileuse et présentant un taux de clinker nul ou plus faible que des produits équivalents et permet, à propriétés mécaniques équivalentes, de réduire les émissions de $CO_2$ et les coûts de production. En outre, la terre argileuse a de préférence pas subi d'étape de calcination, étape énergivore générant en outre l'émission de gaz à effet de serre et plus particulièrement de dioxyde de carbone.

Enfin, avantageusement, comme cela sera présenté dans les exemples, un liant de construction selon l'invention permet la fabrication de matériaux de construction présentant des propriétés mécaniques au moins équivalentes au ciment Portland et bien supérieures aux matériaux « bas carbone », tels que ceux décrits précédemment.

Ainsi, selon un **premier aspect,** l'invention porte sur un **procédé 100 de sélection de la composition d'un matériau de construction** comportant une terre argileuse excavée. Etant donné que le liant de construction peut ensuite être utilisé pour former un béton de site, suite par exemple à l'ajout d'une charge, le procédé de sélection 100 peut alternativement correspondre à un procédé 100 de sélection de la composition d'un béton de site.

En particulier, pour qu'une préparation d'un matériau de construction à partir de la terre argileuse excavée soit possible, la composition de matériau de construction doit comporter des quantités d'agent défloculant et d'agent d'activation adaptées à la terre argileuse excavée. Pour cela, un procédé selon l'invention, de préférence mis en oeuvre par un dispositif informatique comportant un module de calcul peut comporter une étape de réception 130, par le module de calcul, d'une valeur mesurée d'au moins une propriété physicochimique d'une terre argileuse excavée ; et une étape de sélection 170, par le module de calcul, d'une quantité d'agent défloculant et d'une quantité d'agent d'activation adaptées à la terre argileuse excavée.

En outre, un procédé selon l'invention peut comporter des étapes telles que : des traitements 110 préalables de la terre argileuse excavée, des mesures 120 de propriétés physicochimiques de la terre argileuse excavée, la réception 140 de valeur de propriété mécanique souhaitée du matériau de construction, la génération 150 d'une pluralité de combinaisons de valeurs de quantité d'agent défloculant et d'agent d'activation, la détermination 160 d'une valeur de propriété mécanique souhaitée du matériau de construction, ou encore la détermination d'au moins une valeur de propriété physicochimique ou mécanique du matériau de construction en formation.

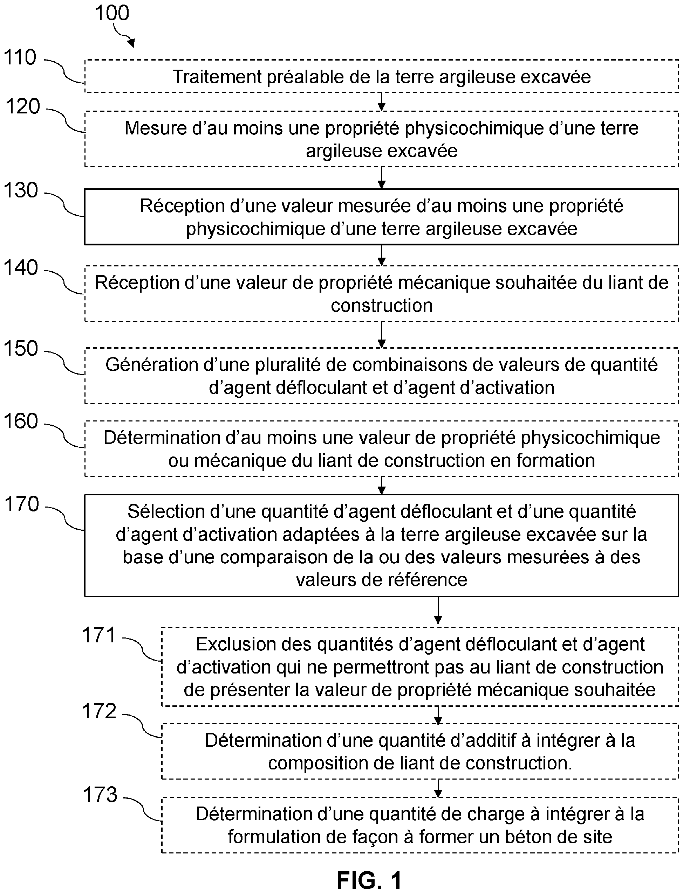

Comme cela est illustré à la **figure 1,** le procédé de sélection selon l'invention peut comporter une étape de **traitement 110 préalable de la terre argileuse excavée.** Ainsi, avantageusement, la ou les valeurs de mesures sont obtenues à partir d'un échantillon de terre argileuse excavée ayant subi une étape de traitement 110 préalable de la terre argileuse excavée.

Cette étape de traitement préalable peut par exemple comporter ou consister en un fractionnement, un broyage, triage (e.g. en fonction de la teinte), tamisage et/ou séchage de la terre argileuse excavée.

En particulier, étant donné que, dans le cadre de la présente invention, la terre argileuse est une terre excavée, elle peut comporter des éléments grossiers ou fractions de dimensions élevées qu'il serait avantageux de supprimer dans les premières étapes du procédé. Ainsi de façon particulière, le procédé selon l'invention peut comporter une suppression des éléments présentant au moins une dimension supérieure à 1 cm (pour centimètre), de préférence une suppression des éléments présentant au moins une dimension supérieure à 0,2 cm. De façon préférée, le procédé selon l'invention peut comporter une suppression des éléments présentant au moins une taille supérieure à 1 cm, de préférence supérieure à 475 $\mu$m (pour micromètre), de façon plus préférée supérieure à 75 $\mu$m telle que déterminée selon la norme ASTM D422-63.

En outre, le procédé selon l'invention peut comporter une étape de **mesure 120 d'au moins une propriété physicochimique d'une terre argileuse excavée.** Cette étape est de préférence menée sur un échantillon de terre argileuse excavée et peut être réalisée sur site ou en laboratoire spécialisé. En effet, en fonction de la ou des propriétés physicochimiques mesurées, il sera possible ou non de disposer d'instruments transportables.

L'étape de mesure 120 peut par exemple comporter une étape de mesure de :

- la teneur en argiles dans la terre argileuse excavée, mesurée par exemple par une méthode granulométrique telle que celle décrite dans la norme NF X31-107 ;
- la nature des argiles, obtenue par exemple par diffractométrie des rayons X ;
- la teneur en impuretés et en particulier d'éléments-traces métalliques, obtenue par exemple par analyse élémentaire via un appareil ICP-MS ;
- la salinité à l'aide d'un conductimètre mesurant la conductivité d'une eau de lavage de la terre argileuse ;
- le pH à l'aide d'un pH-mètre mesurant le pH d'une eau de lavage de la terre argileuse ; et
- la capacité totale d'échange de l'argile de la terre argileuse excavée mesurée par exemple par la méthode dite au bleu de méthylène selon la norme NF EN 933-9+A1.

L'étape de mesure 120 peut donc par exemple comporter l'utilisation d'un pH-mètre, d'un diffractomètre à rayon X, d'un conductimètre, d'un microscope électronique, d'un porosimètre au mercure, d'un spectrofluoromètre, d'un ICP-MS (en anglais : Inductively Coupled Plasma Mass Spectrometry pour spectrométrie de masse à plasma à couplage inductif), d'une HPLC-MS (chromatographie en phase liquide couplée à la spectrométrie de masse), d'une GC-MS (chromatographie en phase gazeuse couplée à la spectrométrie de masse), de la mesure de la surface spécifique par la méthode BET (Mesure de surface spécifique, pour Brunauer-Emmett-Teller), d'un granulomètre, ou encore d'un rhéomètre ATG (pour analyse thermogravimétrique).

Le procédé selon l'invention comporte une étape de **réception 130 de valeur mesurée d'au moins une propriété physicochimique d'une terre argileuse excavée.** Cette étape peut en particulier être mise en oeuvre par le module de calcul du dispositif numérique.

La propriété physicochimique de la terre excavée, dont la valeur mesurée est réceptionnée, peut être sélectionnée parmi : la teneur en argiles dans la terre argileuse excavée, la nature des argiles, la granulométrie, la teneur en impuretés, la présence de polluants, la limite de liquidité, la limite de plasticité, la teneur en oxydes métalliques, la salinité, le pH, et la capacité totale d'échange de l'argile de la terre argileuse excavée. Par exemple, la propriété physicochimique de la terre excavée dont la valeur mesurée est réceptionnée peut par exemple être sélectionnée parmi : la teneur en argiles dans la terre argileuse excavée, la nature des argiles, la granulométrie, la teneur en impuretés, la teneur en oxydes métalliques, la salinité, le pH, et la capacité totale d'échange de l'argile de la terre argileuse excavée.

De façon préférée, la propriété physicochimique de la terre excavée dont la valeur mesurée est réceptionnée peut par exemple être sélectionnée parmi : la teneur en argiles dans la terre argileuse excavée, la limite de liquidité, et la limite de plasticité. De façon plus préférée, la propriété physicochimique de la terre excavée dont la valeur mesurée est réceptionnée comporte la teneur en argiles dans la terre argileuse excavée.

En particulier, la teneur en impuretés peut correspondre à la teneur en métaux et avantageusement en oxydes métalliques tels que : oxyde de fer ou oxyde d'aluminium.

De façon préférée, il y a réception de valeurs mesurées d'au moins deux propriétés physicochimiques d'une terre argileuse excavée, de façon plus préférée d'au moins trois et de façon encore plus préférée d'au moins quatre. En effet, en fonction du nombre de propriété physicochimique pris en compte, le résultat du procédé de sélection peut être de meilleure qualité.

La ou les propriétés physicochimiques sont des propriétés physicochimiques de sols largement étudié tel que le pH, la granulométrie, la teneur en argiles.

En particulier, le procédé selon l'invention comporte la réception 130 d'une combinaison de valeurs mesurées sélectionnée parmi :

- la teneur en argiles dans la terre argileuse excavée et la nature des argiles ;
- la teneur en argiles et la capacité totale d'échange de l'argile de la terre argileuse excavée ;
- La teneur en argile et la quantité en polluants ;
- le pH et la teneur en argiles dans la terre argileuse excavée ; ou
- la capacité totale d'échange de l'argile de la terre argileuse excavée et la granulométrie.

En outre, comme présenté à la figure 1, le procédé selon l'invention peut comprendre la **réception 140 d'une valeur de propriété mécanique souhaitée d'un matériau de construction.**

En effet, au-delà de la sélection de la composition d'un matériau de construction, le procédé selon l'invention peut avantageusement permettre de sélectionner une composition d'un matériau de construction permettant la préparation d'un matériau de construction qui présentera des propriété mécanique données. Ainsi, un utilisateur pourra, en fonction de ses besoins, sélectionner les quantités les plus justes pour obtenir un matériau de construction répondant à ses besoins.

Les propriétés mécaniques souhaitées du matériau de construction peuvent par exemple être sélectionnée parmi : la résistance à la compression, le retrait au séchage, le temps de prise, la résistance en flexion, la résistance en traction, le module de Young, le coefficient de Poisson

Par exemple, le procédé selon l'invention peut comporter la réception d'une valeur de résistance à la compression souhaitée pour le matériau de construction. Cette valeur peut par exemple consister en une borne inférieure (e.g. 20 MPa, pour MégaPascal, ou 30 MPa) ou encore à une valeur fixe (e.g. 40 MPa).

De préférence, lorsque le procédé selon l'invention comporte la réception 140 d'une valeur de propriété mécanique souhaitée du matériau de construction, l'étape de sélection 170 des quantités d'agent défloculant et d'agent d'activation comporte en outre une exclusion 171 des quantités d'agent défloculant et d'agent d'activation qui ne permettront pas au matériau de construction de présenter la valeur de propriété mécanique souhaitée. Ainsi, cela peut par exemple correspondre à une sélection via l'algorithme de calcul de toutes les valeurs de A et de D qui permettent à partir d'une valeur mesurée de E d'obtenir une valeur M = 40 MPa. Alternativement en absence d'algorithme de calcul, cela peut comporter un filtrage de toutes les valeurs d'une base de données pour lesquelles la valeur de M est inférieur à 30 MPa.

L'étape de réception 130 de valeur mesurée d'au moins une propriété physicochimique d'une terre argileuse excavée pourra être suivi d'une étape de **génération 150 d'une pluralité de combinaisons de valeurs de quantité d'agent défloculant d'une part et d'agent d'activation d'autre part.** Suite à la génération de cette pluralité de valeurs, le module de calcul pourra mettre en place une étape de sélection 170 de valeurs telle qu'elle sera décrite ci-après.

En outre, le procédé selon l'invention peut comporter une étape de **détermination 160 d'au moins une valeur de** propriété physicochimique ou de **propriété mécanique attendue pour le matériau de construction.** Cette étape est par exemple mise en oeuvre par un module de calcul.

A partir des valeurs mesurées de propriétés physicochimiques de la terre argileuse excavée et de valeurs de quantité d'agent défloculant et d'agent d'activation générées alors il est possible de déterminer une valeur de propriété mécanique d'un matériau de construction formé à partir de la terre excavée et des quantités d'agent défloculant et d'agent d'activation considérées.

Le procédé selon l'invention comporte une étape de **sélection 170 d'une quantité d'agent défloculant et d'une quantité d'agent d'activation adaptées à la terre argileuse excavée.** Cette étape peut par exemple être mise en oeuvre par un module de calcul.

La quantité d'agent défloculant et d'agent d'activation peut correspondre à un volume, à une masse ou encore à une proportion. De façon préférée, la quantité correspond à une proportion par rapport à une quantité de terre argileuse excavée à ajouter à la composition de matériau de construction. Alternativement, si la quantité correspond à un volume ou à une masse alors elle est associée à une quantité de terre argileuse excavée à ajouter à la composition de matériau de construction.

En outre, la sélection 170 d'une quantité d'agent défloculant et d'une quantité d'agent d'activation peut comporter la détermination de la nature de l'agent défloculant et/ou de l'agent d'activation à ajouter. Par exemple, la nature de ces agents peut correspondre à une famille de molécules chimiques ou bien à une molécule chimique particulière ou encore à une combinaison de molécules.

En effet, l'agent défloculant peut être une combinaison de molécules et la sélection d'une quantité d'agent défloculant peut alors correspondre à la sélection de quantité de chacune des molécules composant l'agent défloculant. Il en va de même pour l'agent d'activation qui peut correspondre à une molécule ou à une pluralité de molécules.

Avantageusement, la sélection se fait sur la base d'une comparaison de la ou des valeurs mesurées de propriété physicochimique d'une terre argileuse excavée à des valeurs de référence. En particulier, les valeurs de références comportent des corrélations entre des valeurs mesurées d'au moins une propriété physicochimique d'une terre argileuse et des quantités d'agent défloculant et d'agent d'activation adaptées à ladite terre argileuse pour former un matériau de construction.

## Agent défloculant

De nombreux composés peuvent faire office d'agents défloculant et beaucoup sont généralement connus de l'homme du métier.

Dans le cadre de l'invention, l'agent défloculant est en particulier un surfactant non-ionique tel qu'un éther de polyoxyéthylène. L'éther de polyoxyéthylène peut par exemple être sélectionné parmi : un éther de lauryl poly(oxyéthylène).

L'agent défloculant peut aussi être un agent anionique tel qu'un surfactant anionique. En particulier, l'agent anionique peut être sélectionné parmi : des sulfonates d'alkylaryle, des aminoalcool, des carbonates, des silicates, des acides gras, des humates (e.g. humates de sodium), des acides carboxyliques, des lignosulfonates (e.g. lignosulfonates de sodium), des polyacrylates, des phosphates ou polyphosphates tels que l'hexamétaphosphate de sodium, le tripolyphosphate de sodium, l'orthophosphate de sodium, des carboxyméthylcelluloses et leurs mélanges.

L'agent défloculant peut aussi être un polyacrylate. Il peut alors être sélectionné par exemple parmi du polyacrylate de sodium et du polyacrylate de d'ammonium.

L'agent défloculant peut également être une amine sélectionnée par exemple parmi : les 2-amino-2-methyl-1-propanol ; mono-, di- or triethanolamine ; les isopropanolamines (1-Amino-2-propanol, diisopropanolamine et triisopropanolamine) et N-alkylated ethanolamines. L'agent défloculant peut aussi être un silicate tel que le silicate de sodium, le métasilicate de sodium ou le trisilicate de sodium.

Alternativement, comme cela a été présenté précédemment, l'agent défloculant peut être un mélange de composés, tel qu'un mélange comportant au moins deux composés sélectionnés parmi : surfactant non-ionique, agent anionique, polyacrylate, amine et composé organophosphoré.

En particulier, l'agent défloculant peut être un mélange de silicate de sodium et de carbonate de sodium.

De façon préférée, l'agent défloculant est sélectionné parmi : un lignosulphonate (e.g. lignosulphonate de sodium), un polyacrylate, un humate et leurs mélanges.

L'agent défloculant est de préférence sous forme d'un sel.

Cependant, l'invention ne saurait se limiter aux agents défloculants cités précédemment, tout type d'agent défloculant connu par l'homme du métier peut être utilisé en lieu et place desdits agents défloculant cités précédemment.

## Agent d'activation

C'est l'agent d'activation, en lien avec la terre argileuse excavée et l'agent défloculant, qui va conférer au matériau de construction ses propriétés mécaniques d'intérêt.

Sans être limité par la théorie, l'agent d'activation peut permettre la constitution d'un réseau entre les feuillets d'argile qui apportera ses propriétés mécaniques au matériau de construction selon l'invention.

En particulier, l'agent d'activation peut comporter des oxydes métalliques et/ou être une composition d'activation alcaline.

De façon préférée, les oxydes métalliques sont des oxydes de métaux de transition. De façon plus préférée, les oxydes métalliques sont sélectionnés parmi : des oxydes de fer tels que FeO, $Fe_3O_4$, $Fe_2O_3$, $Fe_2O_3$, l'alumine $Al_2O_3$, l'oxyde de manganèse (II) MnO, l'oxyde de titane(IV) $TiO_2$ et leurs mélanges.

Les oxydes métalliques peuvent de préférence provenir d'une composition de laitiers de hauts fourneaux par exemple formés lors de l'élaboration de la fonte à partir de minerai de fer.

Les oxydes métalliques sont présents à une teneur d'au moins 2 % en poids du matériau de construction, de préférence d'au moins 5 % en poids du matériau de construction, de façon plus préférée d'au moins 10 % en poids du matériau de construction.

Lorsque l'agent d'activation est une composition d'activation alkaline. La composition alcaline peut de préférence comporter un composé présentant un pKa supérieur ou égal à 10, de façon plus préférée supérieur ou égal à 12, de façon encore plus préférée sensiblement égal à 14. La composition alcaline peut par exemple comporter un composé organophosphoré tel que le tripolyphosphate de sodium désigné par l'acronyme NaTPP.

En particulier l'agent d'activation peut comporter un mélange d'hydroxyde de sodium et de silicate de sodium.

Avantageusement, l'agent d'activation peut être une composition d'activation alkaline comportant en outre des oxydes métalliques. Comme cela sera montré dans les exemples, des liants de construction préparés à partir d'un tel l'agent d'activation présentent de bonnes propriétés mécaniques. Ainsi, de façon préférée, l'agent d'activation peut comporter des oxydes métalliques et au moins un composé présentant un pKa supérieur ou égal à 10.

En outre, l'étape de sélection 170 peut comporter une **détermination 172 d'une quantité d'additif** à intégrer à la composition de matériau de construction. En effet, le procédé de sélection selon l'invention peut conduire à une composition de matériau de construction comportant certains additifs en des concentrations déterminées. Ces additifs permettent de modifier les propriétés chimiques et/ou mécaniques du matériau de construction final. L'additif est par exemple sélectionné parmi : un plastifiant, un agent de maintien rhéologique synthétique ou naturel, un agent anti-retrait, un agent rétenteur d'eau, un agent entraîneur d'air, une résine synthétique, un pigment et leurs mélanges.

Le plastifiant peut par exemple être un polyacrylate, un polynaphtalènes sulfonate, un polycarboxylate, ou un polyphosphonate.

En outre, l'étape de sélection 170 peut comporter une **détermination 173 d'une quantité de charge** à intégrer à la formulation de façon à former un béton de site. Ces charges permettent de modifier les propriétés mécaniques du matériau de construction final.

La charge peut par exemple être sélectionnée parmi des granulats recyclés ou non, des poudres, du sable, des gravillons, des graviers, du béton concassé et/ou des fibres.

Les fibres sont par exemple sélectionnées parmi : des fibres végétales telles que des fibres de coton de lin, de chanvre, de cellulose, de bambou, de miscanthus, des fibres synthétiques telles que des fibres métalliques, de verre, de carbone, de polypropylène et leurs mélanges. La présence de fibres peut permettre la formation d'un matériau de construction aux propriété mécaniques et isolantes améliorées.

De façon avantageuse et comme cela a été précédemment abordé, l'étape de détermination 170 d'une quantité d'agent défloculant et d'une quantité d'agent d'activation adaptées à la terre argileuse excavée comporte la mise en oeuvre d'un **algorithme de calcul préalablement calibré.**

Cet algorithme de calcul peut avoir été construit à partir de différents modèles d'apprentissage, notamment de partitionnement, supervisés ou non supervisés.

Un modèle statistique d'apprentissage non supervisé peut par exemple être sélectionné parmi un modèle de mélange Gaussien non supervisé, une classification ascendante hiérarchique (Hierarchical clustering Agglomerative en terminologie Anglo-Saxonne), une classification descendante hiérarchique (Hierarchical clustering divisive en terminologie Anglo-Saxonne). Un modèle statistique d'apprentissage supervisé peut par exemple être sélectionné parmi les méthodes à noyau (e.g. Séparateurs à Vaste Marge - Support Vector Machines SVM, Kernel Ridge Regression) décrites par exemple dans Burges, 1998 (Data Mining and Knowledge Discovery. A Tutorial on Support Vector Machines for Pattern Recognition), les méthodes d'ensembles (e.g. Bagging, Boosting, arbres de décision, Random Forest) décrites par exemple dans Brieman, 2001 (Machine Learning. Random Forests), ou les réseaux de neurones décrits par exemple dans Rosenblatt, 1958 (The perceptron: a probabilistic model for information storage and organization in the brain).

De préférence, l'algorithme de calcul préalablement calibré a été obtenu par la mise en oeuvre d'une méthode statistique d'apprentissage supervisé.

**Ainsi, selon un autre aspect, l'invention porte sur un procédé 200 de calibrage d'un algorithme de calcul.** Cet algorithme de calcul est en particulier dédié à la détermination de la composition d'un matériau de construction. Un procédé de calibrage selon l'invention peut en particulier être mis en oeuvre par un dispositif numérique comportant un module d'apprentissage.

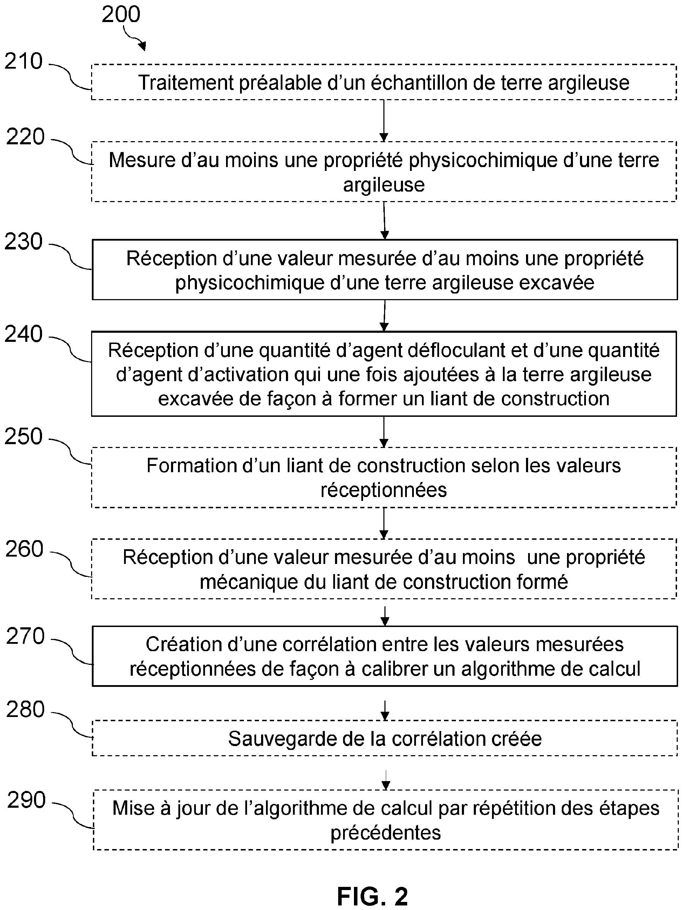

Comme cela est illustré à la **figure 2,** un tel procédé de calibrage selon l'invention comporte une étape de **réception 230 d'une valeur mesurée d'au moins une propriété physicochimique d'une terre argileuse excavée.**

De façon préférée, il y a réception 230 de plusieurs valeurs mesurées et en particulier des valeurs d'au moins deux propriétés physicochimiques d'une terre argileuse excavée, de façon plus préférée d'au moins trois et de façon encore plus préférée d'au moins quatre. En effet, en fonction du nombre de propriété physicochimique pris en compte, le procédé de calibrage sera de meilleure qualité.

Le procédé de calibrage selon l'invention comporte également une étape de **réception 240 d'une valeur de quantité d'agent défloculant et d'une valeur de quantité d'agent d'activation.** Ces valeurs correspondent à des quantités d'agents qui une fois ajoutées à la terre argileuse excavée permettent de former un matériau de construction.

La quantité d'agent défloculant et d'agent d'activation peut correspondre à un volume, à une masse ou encore à une proportion. De façon préférée, la quantité correspond à une proportion par rapport à une quantité de terre argileuse excavée à ajouter à la composition de matériau de construction. Alternativement, si la quantité correspond à un volume ou à une masse alors elle est associée à une quantité de terre argileuse excavée à ajouter à la composition de matériau de construction. En outre, la réception 240 de valeur de quantités d'agent défloculant et quantité d'agent d'activation peut comporter la réception de la nature de l'agent défloculant et/ou de l'agent d'activation. Par exemple, la nature de ces agents peut correspondre à une famille de molécule chimiques ou bien à une molécule chimique particulière ou encore à une combinaison de molécules.

Ces valeurs peuvent avoir été obtenues au travers d'essai qui seront décrit dans la partie exemples. Il y a intégration dans le procédé de calibrage de seulement les quantités d'agents permettant la formation d'un matériau de construction.

En effet, le procédé de calibration peut inclure une étape de **formation 250 d'un matériau de construction selon les valeurs réceptionnées.** Alternativement, et préférablement, une pluralité de combinaisons de valeurs de quantité d'agent ont été testées sur une pluralité de terre argileuse excavées de façon à former une base de données pouvant être utilisée comme données d'entrée dans le procédé de calibrage.

Le procédé comporte ensuite une étape de **création 270 d'une corrélation entre les valeurs mesurées réceptionnées de façon à calibrer un algorithme de calcul.** Cette étape de corrélation, basée sur des valeurs mesurées permet de construire un algorithme de calcul à partir d'un modèle statistique d'apprentissage. Ainsi, l'algorithme de calcul pourra prendre la forme d'une fonction f dans une équation de type

$$Y = f(E, A, D)$$

De façon préférée, comme cela est présenté à la figure 2, préalablement à l'étape de création 270, le procédé de calibrage selon l'invention peut comporter en outre une étape de **réception 260 d'une valeur mesurée d'au moins une propriété mécanique du matériau de construction formé.** En effet, outre l'utilisation des valeurs de quantité d'agents et la ou les valeurs de propriété physicochimique de la terre argileuse excavées, le procédé de calibrage selon l'invention peut utiliser une ou plusieurs valeurs mesurées du matériau de construction obtenu. Ainsi, l'algorithme de calcul pourra prendre la forme d'une fonction f dans une équation de type :

$$M = f(E, A, D)$$

De façon préférée, il y a réception 260 de plusieurs valeurs mesurées et en particulier des valeurs d'au moins deux propriétés physicochimiques du matériau de construction, de façon plus préférée d'au moins trois et de façon encore plus préférée d'au moins quatre.

En outre, comme illustré à la **figure 2,** le procédé de calibrage selon l'invention peut comporter une étape de traitement 210 préalable d'un échantillon de terre argileuse pouvant venir avant une étape de mesure 220 d'au moins une propriété physicochimique d'une terre argileuse. De plus, une fois la corrélation établie, elle peut être sauvegardée 280 sur un support d'enregistrement tel qu'une mémoire vive ou une mémoire non volatile.

De façon avantageuse, un procédé de calibrage selon l'invention peut comporter une étape de **mise à jour 290 de l'algorithme de calcul** par répétition des étapes précédentes décrites précédemment et a minima : Réception 230 d'une valeur mesurée d'au moins une propriété physicochimique d'une terre argileuse excavée, Réception 240 d'une quantité d'agent défloculant et d'une quantité d'agent d'activation qui une fois ajoutées à la terre argileuse excavée de façon à former un matériau de construction et Création 270 d'une corrélation entre les valeurs mesurées réceptionnées de façon à calibrer un algorithme de calcul.

Selon un **autre aspect,** l'invention porte sur un **procédé 300 de préparation d'un matériau de construction à partir d'une terre argileuse excavée.**

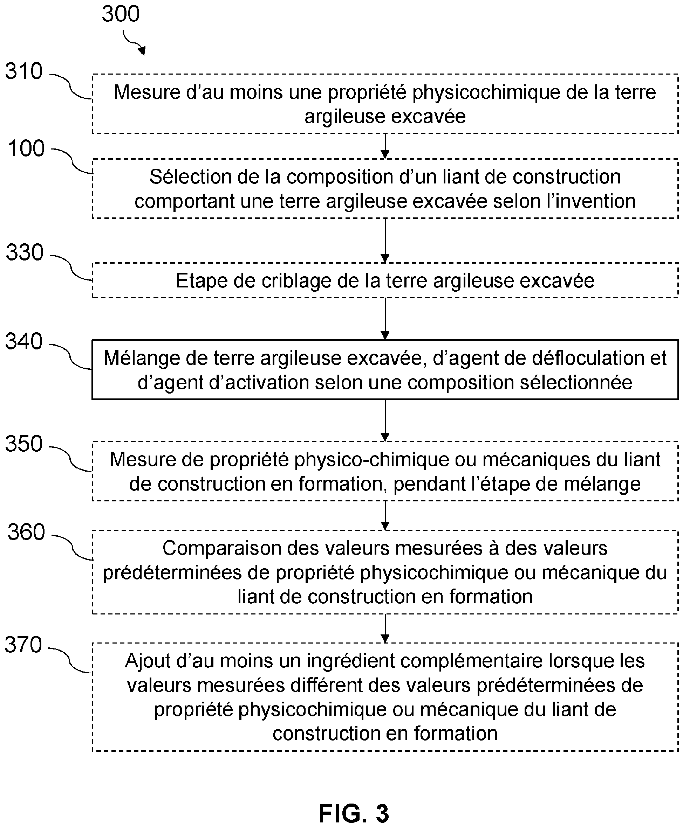

Un tel procédé selon l'invention, illustré à la **figure 3,** présente l'avantage d'être un procédé dit bas carbone, c'est-à-dire dont les émissions en gaz à effet de serre, telles que notamment les émissions de dioxyde de carbone, sont réduites au regard des émissions de gaz à effet de serre des procédés de préparation des liants de construction connus. De telles réductions d'émissions de gaz à effet de serre sont notamment liées à l'absence d'une étape de calcination étant particulièrement énergivore.

De plus, la préparation d'un liant de construction selon l'invention peut permettre la préparation d'un béton de site réalisé au moins en partie à partir de matière première provenant du site de construction. De telles caractéristiques concourent encore à réduire l'empreinte environnementale du béton produit. Une fois qu'il y a eu sélection d'une quantité d'agent défloculant et d'une quantité d'agent d'activation adaptées à la terre argileuse excavée il est possible selon des méthodes conventionnelles de procéder à la préparation d'un matériau de construction à partir d'une terre argileuse excavée.

Le procédé de préparation selon l'invention peut comporter une étape de **mesure 310 d'au moins une propriété physicochimique de la terre argileuse excavée.**

Une telle étape peut être réalisée bien avant l'étape de mélange 340. C'est par exemple le cas si des études préalables sont réalisées et qu'il n'est pas nécessaire d'utiliser rapidement la terre excavée. Alternativement, l'étape de mesure 310 d'au moins une propriété physicochimique de la terre argileuse excavée peut être réalisé juste avant les étapes de sélection 100 de la composition d'un matériau de construction, correspondant à une étape de mise en oeuvre du procédé 100 selon l'invention, et de mélange 340. C'est par exemple le cas dans un procédé automatisé de préparation d'un matériau de construction à partir d'une terre argileuse excavée où la terre argileuse excavée est analysée en ligne avec un appareil de mesure transportable puis mélangée en continue avec des quantités sélectionnées d'agents de façon à former un matériau de construction en un temps très court.

De façon préférée, il y a mesure de plusieurs valeurs et en particulier des valeurs d'au moins deux propriétés physicochimiques de la terre argileuse excavée, de façon plus préférée d'au moins trois et de façon encore plus préférée d'au moins quatre.

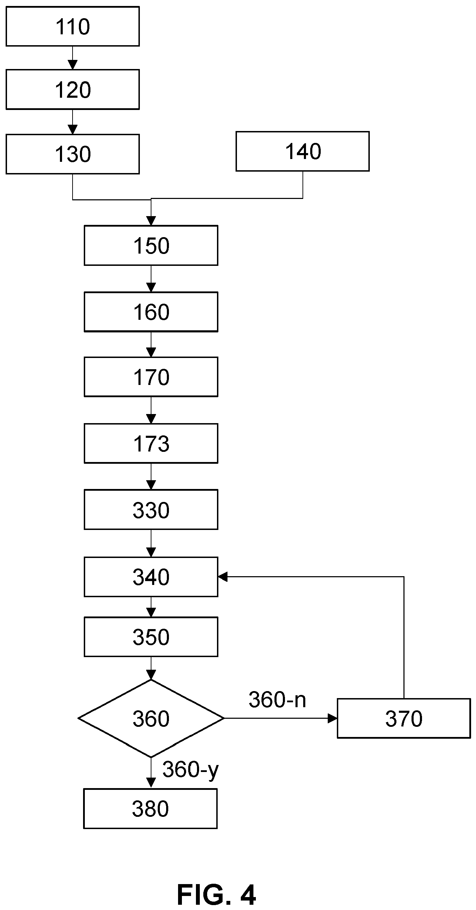

En outre, comme illustré à la figure 3 et à la **figure 4,** un procédé de préparation selon l'invention peut comporter une **sélection 100 de la composition d'un matériau de construction** comportant une terre argileuse excavée selon l'invention.

En outre, il peut comporter une étape de **mélange 340 de terre argileuse excavée, d'agent défloculant et d'agent d'activation** selon la composition sélectionnée.

Lors de l'étape de mélange, l'eau peut être ajoutée de façon à ce que le rapport entre la masse d'eau et la masse de matériau de construction soit inférieur à 1 et par exemple compris entre 0,4 et 0,8. En outre, l'eau peut avantageusement être ajouté après que la terre argileuse excavée et l'agent défloculant aient été mélangés à sec.

Ainsi, de façon préférée, le procédé selon l'invention peut comporter une étape de mélange de façon à obtenir une suspension de terre argileuse excavée dispersée ou défloculée. Lors du mélange, de préférence, l'agent défloculant est ajouté avant l'agent d'activation de façon à ce que l'agent d'activation soit mélangé à de la terre argileuse excavée dispersée ou défloculée.

Cette étape de mélange 340 de la suspension d'argile peut avantageusement mais non limitativement être réalisée dans un dispositif sélectionné parmi : un malaxeur et un camion toupie ou plus généralement au sein de tout dispositif adapté pour mélanger une terre argileuse.

De façon préférée, le procédé de préparation peut comporter une **étape de criblage 330 de la terre argileuse excavée.** Cette étape de criblage intervient avant l'étape de mélange 340 et avant ou après l'étape de mesure 310. En particulier, elle est réalisée de façon à supprimer les granulats dont le diamètre est supérieur à 20 mm (pour millimètre).

De façon plus large, le procédé de préparation peut comporter une étape de préparation de la terre argileuse excavée, ladite préparation pouvant par exemple comporter : séchage, broyage, tamisage, stockage.

De préférence, le prétraitement ou l'étape de criblage comporte au moins un fractionnement tel qu'un tamisage, de façon plus préférée un fractionnement tel qu'un tamisage à 50 $\mu$m. Avantageusement mais non limitativement, les éléments ou particules ainsi tamisés, telles que par exemple des fractions de sable et/ou de granulats, peuvent être réutilisées dans la formulation du matériau de construction et en particulier du béton de site. La fraction la plus intéressante pour la préparation du matériau de construction étant la fraction non retenue par le tamis. Ainsi, un procédé 300 selon l'invention de préparation d'un matériau de construction à partir d'une terre argileuse excavée comportera avantageusement une étape de fractionnement 335 de la terre argileuse excavée éventuellement criblée, ledit fractionnement s'effectuant de préférence à 50 $\mu$m.

Alternativement, la terre argileuse excavée peut ne pas être préalablement traitée et l'ensemble de la terre argileuse est utilisée pour obtenir le matériau de construction. Dans ce cas, le procédé permet d'obtenir un béton de site.

Cela permet avantageusement de valoriser l'ensemble de la terre argileuse excavée, notamment dans le cas où les propriétés physico-chimiques associées à ladite terre argileuse excavée sont suffisantes pour obtenir un matériau de construction présentant les propriétés mécaniques désirées. Ainsi, l'ensemble de la terre peut être valorisé dès le départ sans avoir obligatoirement besoin d'isoler l'argile pour la traiter et formuler le matériau.

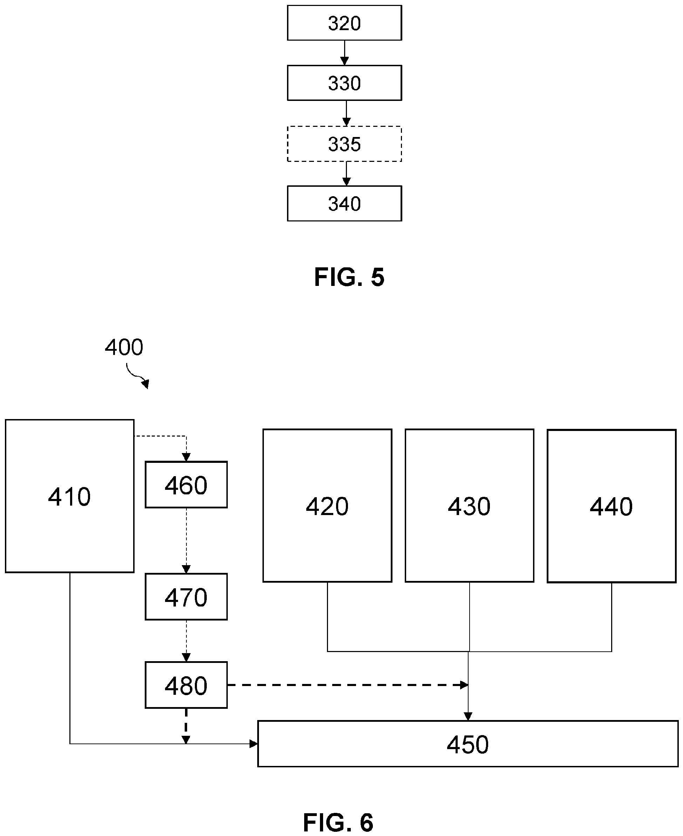

Comme cela est illustré à **la figure 5,** un procédé 300 selon l'invention de préparation d'un matériau de construction à partir d'une terre argileuse excavée comportera avantageusement :

- une étape d'excavation 320 d'une terre argileuse ;
- une étape de criblage 330 de la terre argileuse excavée lorsque la terre argileuse excavée comporte des pierres retenues par un criblage à 2 cm ;
- une étape de mélange 340 de terre argileuse excavée, de préférence la fraction inférieure à 50 $\mu$m, d'agent défloculant et d'agent d'activation.

En outre, avantageusement, le procédé de préparation peut comporter en outre une étape de traitement des polluants. Une telle étape de traitement des polluants peut permettre de réduire la concentration en pollutions de la terre argileuse excavée tel que des traces d'éléments métalliques, des hydrocarbures (e.g. Hydrocarbure Aromatique Polycyclique et C10 à C40), PCB (PolyChloroBiphényles), BTEX (benzène, toluène, éthylbenzène, xylènes), COT (carbone organique total).

En outre, classiquement, avant, concomitamment ou après l'ajout de la composition d'activation, un procédé selon l'invention peut comporter l'ajout d'additifs ou de charges permettant de modifier les propriétés mécaniques du matériau de construction final.

Avantageusement, le procédé de préparation peut comporter une mesure 350 d'une ou de plusieurs valeurs de propriétés physico-chimiques ou mécaniques du matériau de construction, pendant l'étape de mélange (i.e. le matériau de construction est en formation), une comparaison 360 des valeurs mesurées à des valeurs prédéterminées de propriété physicochimique ou mécanique du matériau de construction en formation.

Ainsi, il est possible de réaliser une contrôle qualité du matériau de construction en cours de formation.

En outre, lorsque les valeurs mesurées diffèrent des valeurs prédéterminées de propriété physicochimique ou mécanique du matériau de construction en formation, le procédé de préparation peut comporter une étape d'ajout 370 d'au moins un ingrédient complémentaire. Ici, l'ingrédient complémentaire peut par exemple être sélectionné parmi : agent défloculant, agent d'activation et terre argileuse excavée de façon à modifier la composition prédéterminée. L'ingrédient complémentaire peut également être sélectionné parmi : additifs ou charges tels que décrit précédemment.

Cela permet de s'assurer que le matériau de construction en formation présentera les propriétés mécaniques les plus proches possibles des propriétés mécaniques attendues. En effet, une déviation peut être identifiée au moment du mélange et corrigée avant que le matériau ne soit utilisé.

En outre, comme illustré à la figure 4, le procédé est terminé par une étape de récupération 380 du matériau de construction formé.

Selon un **autre aspect,** l'invention porte sur un **système 400 de préparation d'un matériau de construction comportant une terre argileuse excavée.** Alternativement comme évoqué, l'invention porte sur un système 400 de préparation d'un béton de site comportant une terre argileuse excavée.

Un tel procédé selon l'invention, illustré à la figure 5, peut comporter des contenants 410, 420, 430 destinés aux différents constituant du matériau de construction. Par exemple, il peut comporter au moins un contenant 410 destiné à une terre argileuse excavée, au moins un contenant 420 destiné à un agent défloculant et au moins un contenant 430 destinée à un agent d'activation. En outre, il peut comporter au moins un contenant 440 destiné aux charges et/ou additifs. En outre, le système peut comporter un contenant de nettoyage destiné à contenir une solution de nettoyage.

En particulier dans le cas de la terre argileuse excavée, le contenant 410 peut ne pas être un objet mais seulement un lieu au niveau duquel la terre argileuse excavée est stockée. Un contenant peut aussi être sélectionné parmi une cuve, un conteneur, un bac, un silo.

En outre, le système selon l'invention comporte un dispositif 450 de mélange. Un tel dispositif est en particulier capable d'homogénéiser et/ou de brasser les ingrédients précurseurs du liant de construction.

Ce dispositif de mélange 450 est en particulier couplé à des moyens de transports (représentés respectivement par une flèche entre les contenants 410, 420, 430, 440 et le dispositif de mélange 450) automatisés positionné entre les contenants 410, 420, 430 et le dispositif 450 de mélange. Ces moyens de transports peuvent par exemple être des conduites flexibles ou non, des tapis, des convoyeurs ou des vis sans fin. En outre, en combinaison avec les moyens de transports, le système peut comporter des pompes, des vannes, des électrovannes et des limitateurs de débits. En particulier, les limitateurs de débit peuvent être agencés en commutation fonctionnelle avec chacun des moyens de transports pour réguler indépendamment la quantité de chacun des ingrédients distribués au dispositif 450 de mélange.

En outre, le système selon l'invention peut comporter un moyen de mesure 460 d'au moins propriété physico-chimique de la terre argileuse excavée. Un tel moyen de mesure 460 peut par exemple être un pH-mètre, un diffractomètre à rayon X, un conductimètre, un microscope électronique, un porosimètre au mercure, un spectrofluoromètre, un ICP-MS, d'une HPLC-MS, d'une GC-MS, de la mesure de la surface spécifique par la méthode BET, un granulomètre, ou encore un rhéomètre.

En outre, le système selon l'invention peut comporter un moyen de calcul 470 apte à, de préférence configuré pour, mettre en oeuvre un programme informatique configuré pour réaliser :

- Une étape d'obtention d'une valeur mesurée d'au moins une propriété physicochimique de la terre argileuse excavée ; et
- Une étape de détermination d'une quantité d'agent défloculant et d'une quantité d'agent d'activation adaptées à la terre argileuse excavée sur la base d'une comparaison de la ou des valeurs mesurées à des valeurs de référence.

En outre, le système selon l'invention comporte un module de contrôle 480 configuré pour générer des signaux de sortie à destination des moyens de transports automatisés. De tels signaux de sortie permettront au système de transporter les quantités d'agent défloculant et d'agent d'activation déterminées vers le dispositif 450 de mélange. En outre, ils pourront permettre de transporter une quantité prédéterminée de terre argileuse excavée vers le dispositif 450 de mélange.

De façon préférée, le système de préparation d'un matériau de construction selon l'invention peut en outre comporter : un cribleur, de préférence compact, un broyeur de terre, un malaxeur planétaire.

De façon plus préférée, il peut comporter un broyeur de terre. En effet, le broyeur de terre permet en particulier d'éliminer la présence d'agglomérats qui pourrait influencer la qualité du liant de construction ou du béton de site. En outre, la terre argileuse réduite en poudre permettra d'avoir un aspect homogène dans le béton de site.

De façon encore plus préférée, le système de préparation d'un matériau de construction selon l'invention comporte un cribleur permettant d'isoler les cailloux de diamètre supérieur à 10 cm, de préférence supérieur à 2 cm. Le système de préparation d'un matériau de construction peut également comporter un moyen de tri par exemple de type tamis permettant d'isoler les particules de diamètre inférieur à 50 $\mu$m, de préférence les particules de diamètre inférieur à 20 $\mu$m. Avantageusement mais non limitativement, les éléments ou particules ainsi séparés, telles que par exemple des fractions de sable et/ou de granulats, peuvent être réutilisées dans la formulation du matériau de construction et en particulier du béton de site. Alternativement, la terre argileuse excavée peut ne pas être préalablement traitée et l'ensemble de la terre argileuse est utilisée pour obtenir le matériau de construction. Dans ce cas, le procédé permet d'obtenir un béton de site.

En outre, il peut comporter un dispositif de dépollution permettant de traiter la terre excavée avant son utilisation.

Ainsi, selon un **autre aspect,** l'invention porte sur un **matériau de construction formé à partir d'une terre argileuse excavée.** En particulier, ce matériau de construction est susceptible d'être préparé selon un procédé de préparation selon l'invention décrit ci-dessus. Par exemple, ce matériau de construction est directement préparé selon un procédé de préparation selon l'invention décrit ci-dessus.

Le matériau de construction selon la présente invention est caractérisé en ce qu'il comporte un agent défloculant et une terre argileuse excavée. A noter que la préparation du matériau de construction comporte l'ajout d'un agent d'activation. Néanmoins étant donné que cet agent d'activation peut être amené à réagir avec la terre argileuse excavée, il n'est pas systématiquement retrouvé dans le matériau de construction. Néanmoins, ponctuellement, le matériau de construction selon la présente invention peut comporter un agent défloculant, un agent d'activation et une terre argileuse excavée.

Etant donné l'ajout possible de charges, l'invention porte également sur un béton de site caractérisé en ce qu'il comporte un agent défloculant et une terre argileuse excavée. Alternativement, en absence d"ajout de charges, l'invention porte également sur un liant construction caractérisé en ce qu'il comporte un agent défloculant et une terre argileuse excavée.

Avantageusement, le matériau de construction selon l'invention comporte un mélange de différents types d'argiles. En particulier, il peut comporter une combinaison d'argile sélectionnée parmi :

- L'illite et la kaolinite,
- L'illite et la kaolinite et la bentonite,
- L'illite et la Bentonite,
- La kaolinite et la bentonite,
- L'illite et la Montmorillonite, ou
- Une combinaison entre Kaolinite, Illite, Smectite, Bentonite, Chlorite, Montmorillonite, Muscovite, Hallocyte, Sepiolite, Attapulgite, et Vermiculite.

En outre, avantageusement, le matériau de construction formé à partir d'une terre argileuse excavée caractérisé en ce qu'il comporte au plus 80 % en poids de particules supérieures à 2 $\mu$m, de préférence au plus 60 % en poids de particules supérieures à 2 $\mu$m. La teneur en particules supérieure à 2 $\mu$m peut par exemple être mesurée selon la norme NF X31-107. Ainsi, la terre excavée à de préférence subit une étape de prétraitement entrainant une granulométrie centrée sur une fraction présentant un diamètre de taille inférieur ou égale à 50 $\mu$m, de préférence inférieure ou égale à 20 $\mu$m.

De façon préférée, un matériau de construction selon l'invention comprend au moins 50% en poids de terre argileuse excavée, au moins 60% en poids de terre argileuse excavée, au moins 70% en poids de terre argileuse excavée, au moins 80 % en poids de terre argileuse excavée, de façon plus préférée au moins 90 % en poids de terre argileuse excavée. C'est avantageusement le cas lorsque le matériau de construction est un liant de construction.

En effet, la sélection de quantité d'agent défloculant et d'agent d'activation présente l'avantage de pouvoir former un liant de construction comportant une quantité élevée de terre argileuse excavée sans que cela ne vienne altérer les propriétés mécaniques des matériaux de construction en découlant. Lorsque le matériau de construction est un béton de site, il pourra comprendre au moins 10 % en poids de terre argileuse excavée, au moins 15 % en poids de terre argileuse excavée, au moins 20 % en poids de terre argileuse excavée, au moins 30% en poids de terre argileuse excavée, au moins 40% en poids de terre argileuse excavée, au moins 50% en poids de terre argileuse excavée.

L'agent défloculant peut représenter au moins 0,1 % en poids du matériau de construction, au moins 0,20 % en poids du matériau de construction, au moins 0,25 % en poids du matériau de construction, de façon préférée au moins 0,5 % en poids du matériau de construction, de façon plus préférée au moins 1 % en poids du matériau de construction, de façon encore plus préférée au moins 1,5 % en poids du matériau de construction, et par exemple au moins 2 % en poids du matériau de construction. C'est avantageusement le cas lorsque le matériau de construction est un béton de site.

L'agent défloculant peut représenter au moins 0,30 % en poids du matériau de construction, au moins 0,5 % en poids du matériau de construction, de façon préférée au moins 1 % en poids du matériau de construction, de façon plus préférée au moins 1,5 % en poids du matériau de construction, de façon encore plus préférée au moins 2 % en poids du matériau de construction, et par exemple au moins 2,5 % en poids du matériau de construction. C'est avantageusement le cas lorsque le matériau de construction est un liant de construction.

En outre, l'agent défloculant peut représenter au plus 20 % en poids du matériau de construction, de façon préférée au plus 15 % en poids du matériau de construction, et de façon plus préférée au plus 10 % en poids du matériau de construction.

En particulier, l'agent défloculant peut représenter entre 0,25 et 10 % en poids du matériau de construction, de préférence entre 0,5 et 10 % en poids du matériau de construction, de façon plus préférée entre 1 et 10 % en poids du matériau de construction, de façon encore plus préférée entre 2 et 8 % en poids du liant de construction et par exemple entre 2 et 5 % en poids du liant de construction. Ainsi, l'agent défloculant peut représenter de façon préférée entre 0,1 et 5 % en poids du matériau de construction.

En particulier, l'agent défloculant représente au moins 0,5 % en poids de la terre argileuse excavée, de préférence au moins 1 % en poids de la terre argileuse excavée, de façon plus préférée au moins 2 % en poids de la terre argileuse excavée, de façon encore plus préférée au moins 3 % en poids en poids de la terre argileuse excavée, et par exemple au moins 4 % en poids en poids de la terre argileuse excavée. En effet, avec de telles concentrations en agent défloculant, la formulation pour liant selon l'invention peut ensuite être utilisée en combinaison avec une composition d'activation pour former un matériau aux propriétés mécaniques avantageuses.

En outre, l'agent défloculant représente au plus 20 % en poids de la terre argileuse excavée, de préférence au plus 10 % en poids de la terre argileuse excavée. En effet, une concentration trop élevée n'est pas nécessaire pour former un matériau aux propriétés mécaniques avantageuses.

En particulier, l'agent défloculant représente entre 0,5 et 20 % en poids de la terre argileuse excavée, de façon préférée entre 1 et 10 % en poids de la terre argileuse excavée, de façon plus préférée entre 3 et 10 % en poids de la terre argileuse excavée et de façon encore plus préférée entre 4 et 10 % en poids de la terre argileuse excavée.

L'agent d'activation est par exemple présent à une teneur d'au moins 5 % en poids du matériau de construction, de façon préférée au moins 7 % en poids du matériau de construction, de façon plus préférée au moins 8 % en poids du matériau de construction. C'est avantageusement le cas lorsque le matériau de construction est un béton de site.

L'agent d'activation peut être présent à une teneur d'au moins 10 % en poids du matériau de construction, de façon préférée au moins 15 % en poids du matériau de construction, de façon plus préférée au moins 20 % en poids du matériau de construction, de façon encore plus préférée au moins 25 % en poids du liant de construction, et par exemple au moins 30 % en poids du liant de construction.

En outre, l'agent d'activation peut représenter au plus 50 % en poids du matériau de construction, de façon préférée au plus 45 % en poids du matériau de construction, et de façon plus préférée au plus 40 % en poids du matériau de construction. C'est avantageusement le cas lorsque le matériau de construction est un liant de construction.

L'agent d'activation peut aussi représenter au plus 15 % en poids du matériau de construction, de façon préférée au plus 12 % en poids du matériau de construction, et de façon plus préférée au plus 10 % en poids du matériau de construction. C'est avantageusement le cas lorsque le matériau de construction est un béton de site.

En particulier, l'agent d'activation peut représenter entre 3 et 12 % en poids du matériau de construction, de préférence entre 4 et 10 % en poids du matériau de construction, de façon plus préférée entre 5 et 10 % en poids du matériau de construction. C'est avantageusement le cas lorsque le matériau de construction est un béton de site.

En particulier, l'agent d'activation peut représenter entre 10 et 80 % en poids du matériau de construction, de préférence entre 15 et 80 % en poids du matériau de construction, de façon plus préférée entre 20 et 80 % en poids du matériau de construction de façon encore plus préférée entre 30 et 80 % en poids du matériau de construction et par exemple entre 40 et 60 % en poids du matériau de construction. C'est avantageusement le cas lorsque le matériau de construction est un liant de construction.

Dans un mode de réalisation particulier, un matériau de construction, de préférence un liant de construction conforme à l'invention comprend :

- de 30 % à 80 % en poids de terre argileuse excavée,
- de 1 % à 10 % en poids de d'agent défloculant, et
- de 10 % à 50 % en poids d'un agent d'activation.

De façon préférée, un matériau de construction, de préférence un liant de construction, conforme à l'invention comprend :

- de 50 % à 75 % en poids de terre argileuse excavée,
- de 1 % à 10 % en poids d'agent défloculant, et
- de 15 % à 50 % en poids d'un agent d'activation.

De façon plus préférée, un matériau de construction, de préférence un liant de construction conforme à l'invention comprend :

- de 50 % à 70 % en poids de terre argileuse excavée,
- de 2 % à 5 % en poids d'agent défloculant, et
- de 15 % à 45 % en poids d'un agent d'activation.

De façon plus préférée, un matériau de construction, de préférence un liant de construction, conforme à l'invention comprend :

- de 50 % à 60 % en poids de terre argileuse excavée,
- de 2 % à 5 % en poids d'agent défloculant, et
- de 25 % à 45 % en poids d'oxydes métalliques.

De façon encore plus préférée, un matériau de construction, de préférence un liant de construction, conforme à l'invention comprend :

- de 30 % à 80 % en poids de terre argileuse excavée,
- de 1 % à 10 % en poids d'agent défloculant,
- de 10 % à 40 % en poids d'oxydes métalliques, et
- de 2 % à 15 % en poids d'une base forte.

De façon encore plus préférée, un matériau de construction, de préférence un liant de construction, conforme à l'invention comprend :

- de 30 % à 80 % en poids de terre argileuse excavée,
- de 0,1 % à 10 % en poids d'agent défloculant, et
- de 15 % à 50 % en poids de laitiers de haut fourneaux.

De façon encore plus préférée, un matériau de construction, de préférence un liant de construction conforme à l'invention comprend :

- de 30 % à 80 % en poids de terre argileuse excavée,
- de 0,1 % à 10 % en poids d'agent défloculant,
- de 10 % à 45 % en poids de laitiers de haut fourneaux, et
- de 5 % à 20 % en poids d'une composition alcaline telle que du triphosphate.

De façon préférée, un matériau de construction conforme à l'invention est un béton de site comprenant :

- entre 5 et 45% en poids, de préférence entre 5 et 30% en poids, de façon plus préférée entre 10 et 20 % en poids d'un liant de construction selon l'invention ;
- entre 25 et 45 % en poids, de préférence entre 30 et 40 % en poids de sable par exemple issu de terres de site, de préférence issu de la terre argileuse excavée ;
- entre 35 et 55 % en poids, de préférence entre 40 et 50 % en poids de granulats par exemple issus de terres de site, de préférence issu de la terre argileuse excavée ; et
- de préférence entre 2 et 10 % en poids d'eau.

De façon plus préférée, un matériau de construction conforme à l'invention est un béton de site comprenant :

- entre 5 et 20% en poids d'argile crue provenant de la terre argileuse excavée, de préférence entre 5 et 15 % en poids d'argile crue provenant de la terre argileuse excavée ;

- entre 0,1 et 3 % en poids d'agent défloculant ;
- entre 3 et 15 % en poids, de préférence entre 5 et 12 % en poids d'un agent d'activation ; par exemple entre 5 % et 10 % en poids d'un laitier de haut fourneaux ;
- entre 25 et 45 % en poids, de préférence entre 30 et 40 % en poids de sable par exemple issu de terres de site, de préférence issu de la terre argileuse excavée ;
- entre 35 et 55 % en poids, de préférence entre 40 et 50 % en poids de granulats par exemple issus de terres de site, de préférence issu de la terre argileuse excavée ; et
- de préférence entre 2 et 10 % en poids d'eau.

Les sables et granulats pourront provenir de carrières. En outre, le liant pourra comporter de l'argile de carrière en complément de l'argile de la terre argileuse excavées.

De plus, le béton de site pourra comporter des adjuvants tels que des plastifiants, des superplastifiants, des agents de maintien rhéologiques ou des entraineurs d'air.

En outre, le rapport massique eau sur matières sèches du liant de construction est avantageusement contrôlé et est de préférence inférieur à 1, de façon plus préférée sensiblement égale à 0,6.

De plus, **selon un autre aspect,** l'invention porte sur un **matériau de construction** formé à partir d'un liant de construction selon l'invention.

En outre, l'invention porte sur un matériau de construction obtenu à partir d'un procédé de préparation selon l'invention. L'invention porte sur un matériau de construction obtenu à partir d'un procédé de préparation selon l'invention.

L'invention permet en particulier la fabrication de :

- matériau de construction isolant : à partir d'un liant de construction selon l'invention additionné de granulats légers de type « végétaux ou poreux » ;
- béton allégé : à partir d'un liant de construction selon l'invention additionné d'agent moussant type poudre d'aluminium. Cela va permettre de piéger de l'air dans le matériau et améliorer ces propriétés isolantes ;
- Eléments de préfabrication : fabrication de blocs ou plaques de bétons en usine à partir du liant de construction selon l'invention ; et
- Modules d'isolation.

Comme cela est illustré par les exemples ci-après, la présente invention fournit une solution basée sur un mélange de matrice argileuse crue, d'agent défloculant et de composition d'activation pour proposer un matériau de construction aux propriétés mécaniques similaire au standard tout en présentant une empreinte carbone réduite.

## EXEMPLES :

### Méthodologie de mesure des propriétés physicochimique de la terre argileuse :

La terre argileuse est préalablement tamisée de façon à supprimer tous les éléments ou particules présentant un diamètre supérieur à 20 $\mu$m. Une telle terre argileuse prétraitée est particulièrement adaptée pour la formation d'un liant de construction selon l'invention.

Le pH est mesuré à partir de 20 g de terre argileuse prétraitée mélangée à 100 mL d'eau distillé. Après agitation pendant 20 minutes à 150 rpm (pour « révolutions per minute » selon une terminologie anglo-saxonne), la suspension est filtrée puis le pH de la solution filtrée est la solution filtrée.

La teneur en argile est mesurée de façon conventionnelle par la méthode granulométrique décrite dans la norme NF X31-107.

La nature des argiles est mesurée de façon conventionnelle par diffractométrie des rayons X.

### Génération de valeurs de références

Comme présenté précédemment, les valeurs de comportent des corrélations entre des valeurs mesurées d'au moins une propriété physicochimique d'une terre argileuse et des valeurs de quantités d'agent défloculant et d'agent d'activation.

Ces valeurs de référence sont générées à partir d'une pluralité d'échantillons de terre argileuse couplé à des quantité variables d'agent défloculant et d'agent d'activation dans un procédé de préparation d'un liant de construction décrit ci-après.

La génération de valeurs de référence peut par exemple mettre en oeuvre un plan d'expérience tel qu'un plan simplexe, un plan de criblage, un plan factoriel, un plan de surface de réponse, un plan de mélange, un plan de Taguchi.

Le tableau 1 ci-dessous présente les propriétés physicochimiques de différents échantillons de terre excavée tandis que le tableau 2 montre un exemple de plan d'expérience permettant de générer des valeurs de références.

[Tableau 1]

| Terre argileuse | Propriété physicochimique | | |
|---|---|---|---|
| | pH | Teneur en argile | Nature des argiles |
| Echantillon A | 7 à 8 | 90 % à 100 % | Smectite et Montmorillionite |
| Echantillon B | 4 à 6 | 90 % à 100 % | Kaolinite |

[Tableau 2]

| Référence | Terre argileuse | Agent défloculant | | Agent d'activation | |
|---|---|---|---|---|---|
| | | Nature | Concentration | Nature | Concentration |
| MUP42 | Echantillon A | na | 0 % en poids de liant | LHF + Solution alkaline | 23 % en poids de liant |
| MUP5B | Echantillon A | na | 0 % en poids de liant | LHF + Triphosphate | 43 % en poids de liant |
| MUP12 | Echantillon A | na | 0 % en poids de liant | Laitier de haut fourneaux | 25 % en poids de liant |
| MUP11 | Echantillon A | Humates de sodium | 2,73 % en poids de liant | Laitier de haut fourneaux | 25 % en poids de liant |
| MUP2 | Echantillon A | Humates de sodium | 2,96 % en poids de liant | Oxydes métalliques | 12% en poids de liant |
| MUP5 | Echantillon A | Humates de sodium | 3,13 % en poids de liant | LHF + Triphosphate | 42 % en poids de liant |
| MUP41 | Echantillon A | Humates de sodium | 3,39 % en poids de liant | LHF + Solution alkaline | 22 % en poids de liant |
| MUP3 | Echantillon A | Humates de sodium | 3,97 % en poids de liant | Oxydes métalliques | 9% en poids de liant |

**Préparation d'un liant de construction** :

Les liants de construction, notamment lors de la génération des valeurs de référence, sont préparées selon un protocole identique, à savoir qu'un prémélange est réalisé entre une terre argileuse et un agent défloculant dans les quantités prédéterminées suivant par exemple un plan d'expérience, puis de l'eau est ajoutée et la suspension est mélangée à basse vitesse, c'est-à-dire sensiblement à six cents tours par minute pendant trente secondes. Ensuite, un agent d'activation est ajouté au prémélange puis le prémélange est mélangé à grande vitesse, c'est-à-dire à environ mille cinq cents tours par minute pendant trois minutes.

Le rapport massique eau sur matières sèches de la composition (aussi appelée liant de construction) est ajusté à une valeur inférieure à 1, plus préférentiellement sensiblement égale à 0,6.

Le liant de construction ainsi formé est ensuite coulé dans un moule puis laissé à maturation à température ambiante, c'est-à-dire environ 20 degrés Celsius pendant vingt-huit jours.

Les propriétés mécaniques du liant de construction sont ensuite évaluées.

**Méthodologie de mesure des propriétés mécaniques des liants de construction** :

Une fois la maturation terminée, le liant de construction est retiré du moule et la résistance mécanique est mesurée. On entend par résistance mécanique d'un liant de construction, sa résistance à la compression, une telle compression étant mesurée selon la norme NF EN 196-1.

Les résultats des mesures réalisées sur les expériences décrites dans le tableau 2 sont présentés ci-dessous dans le tableau 3.

[Tableau 3]

| Référence | Résistance mécanique (en MPa) |
|---|---|
| MUP42 (exemple comparatif) | 27 |
| MUP5B (exemple comparatif) | 25 |
| MUP12 (exemple comparatif) | 21 |
| MUP11 | 41 |
| MUP2 | 37 |
| MUP5 | 45 |
| MUP41 | 43 |
| MUP3 | 37 |

Ces résultats montrent qu'en fonction des quantités d'agent d'activation et d'agent défloculant utilisées, les performances du liant formé seront différentes et en particulier sa résistance mécanique.

En outre, ils montrent que la présence d'agent défloculant permet d'obtenir des résistances mécaniques supérieures à 30 MPa.

**Sélection de la composition d'un liant de construction** :

Suite à la préparation de valeurs de références et si nécessaire d'un algorithme de calcul, il est possible de mettre en oeuvre un procédé de sélection des quantités d'agents défloculant et d'activation adéquates pour une terre argileuse excavée donnée.

Dans un premier temps, un échantillon de la terre argileuse excavée est tamisé de façon à supprimer tous les éléments ou particules présentant un diamètre supérieur à 20 $\mu$m.

Les propriétés physicochimiques de l'échantillon de terre argileuse excavée prétraitée sont ensuite analysées comme décrit ci-dessus.

Les valeurs obtenues sont ensuite transmises à un dispositif informatique configuré pour mettre en oeuvre le procédé selon l'invention.

Ce dernier génère alors des valeurs de quantité d'agent défloculant et d'activation qui permettront une fois couplés à une quantité prédéterminée de terre excavée de former un liant de construction.

**Formation d'un liant de construction selon l'invention**

La terre argileuse excavée est ensuite tamisée de façon à supprimer tous les éléments ou particules présentant un diamètre supérieur à 2 cm puis une quantité prédéterminée de terre argileuse excavée prétraitée est mélangée simultanément ou séquentiellement avec les valeurs de quantité d'agent défloculant et d'activation sélectionnées.

Les liants de construction ou les bétons de sites formés selon l'invention présentent des résistances à la compression équivalentes aux résistances à la compression obtenues avec un béton formé avec du ciment Portland. Ainsi, la présente invention permet de sélectionner la composition adéquate qui permettra de former un liant de construction bas carbone, à partir de terre argileuse excavée, présentant des propriétés mécaniques suffisantes pour en faire un matériau de construction répondant à la majorité des besoins du secteur.

**Revendications**

1. Procédé (100) de sélection de la composition d'un matériau de construction comportant une terre argileuse excavée, ladite composition de matériau de construction devant comporter des quantités d'agent défloculant et d'agent d'activation adaptées à la terre argileuse excavée, ledit procédé étant mis en oeuvre par un dispositif informatique comportant un module de calcul, ledit procédé comportant :

   - Une étape de réception (130), par le module de calcul, d'une valeur mesurée d'au moins une propriété physicochimique d'une terre argileuse excavée ; et
   - Une étape de sélection (170), par le module de calcul, d'une quantité d'agent défloculant et d'une quantité d'agent d'activation adaptées à la terre argileuse excavée sur la base d'une comparaison de la ou des valeurs mesurées à des valeurs de référence, lesdites valeurs de références comportant des corrélations entre des valeurs mesurées d'au moins une propriété physicochimique d'une terre argileuse et des quantités d'agent défloculant et d'agent d'activation adaptées à ladite terre argileuse pour former un matériau de construction.

2. Procédé (100) selon la revendication 1, **caractérisé en ce que** l'au moins une propriété physicochimique est sélectionnée parmi : la teneur en argiles dans la terre argileuse excavée, la nature des argiles, la granulométrie, la teneur en impuretés, la teneur de fractions minéralogiques non argileuse, la teneur en pollutions, l'analyse élémentaire, la teneur en oxydes métalliques, la salinité, le pH, et la capacité totale d'échange de l'argile de la terre argileuse excavée.

3. Procédé (100) selon l'une des revendications 1 ou 2, **caractérisé en ce que** l'au moins une propriété physicochimique est mesurée sur une terre argileuse excavée prétraitée, ledit prétraitement étant sélectionné parmi : broyage, triage, tamisage et/ou séchage de la terre argileuse excavée.

4. Procédé (100) selon l'une quelconque des revendications 1 à 3, **caractérisé en ce qu'**il comprend au préalable la réception (140) d'une valeur de propriété mécanique souhaitée du matériau de construction et **en ce que** l'étape de sélection (170) des quantités d'agent défloculant et d'agent d'activation comporte en outre une exclusion (171) des quantités d'agent défloculant et d'agent d'activation qui ne permettront pas au matériau de construction de présenter la valeur de propriété mécanique souhaitée.

5. Procédé (100) selon l'une quelconque des revendications 1 à 4, **caractérisé en ce que** l'étape de sélection (170), par le module de calcul, d'une quantité d'agent défloculant et d'une quantité d'agent d'activation adaptées à la terre argileuse excavée comporte la mise en oeuvre d'un algorithme de calcul préalablement calibré, de préférence l'algorithme de calcul préalablement calibré a été obtenu par la mise en oeuvre d'une méthode statistique d'apprentissage supervisé.

6. Procédé (200) de calibrage d'un algorithme de calcul pour la détermination de la composition d'un matériau de construction mis en oeuvre par un dispositif numérique comportant un module d'apprentissage, ledit procédé étant **caractérisé en ce qu'**il comporte :

   - Une première étape (230) de réception, par le module d'apprentissage, d'une valeur mesurée d'au moins une propriété physicochimique d'une terre argileuse excavée ;
   - Une deuxième étape (240) de réception, par le module d'apprentissage, d'une valeur de quantité d'agent défloculant et d'une valeur de quantité d'agent d'activation qui une fois ajoutées à la terre argileuse excavée permettent de former un matériau de construction ;
   - Une troisième étape (260) de réception, par le module d'apprentissage, d'une valeur mesurée d'au moins une propriété mécanique du matériau de construction formé à partir de la terre argileuse excavée dont la valeur d'au moins une propriété physicochimique a été réceptionné lors de la première étape (230) de réception, et à partir des quantités d'agent défloculant et d'agent d'activation réceptionnées lors de la deuxième étape (240) de réception ; et
   - Une étape (270) de création d'une corrélation, par le module d'apprentissage, entre les valeurs mesurées réceptionnées de façon à calibrer un algorithme de calcul.

7. Procédé (300) de préparation d'un matériau de construction à partir d'une terre argileuse excavée, le procédé comportant :

   - Une étape de mesure (310) d'au moins propriété physicochimique de la terre argileuse excavée ;
   - Une étape de sélection selon le procédé (100) de sélection de la composition d'un matériau de construction comportant une terre argileuse excavée selon l'une des revendications 1 à 5 ; et
   - Une étape de mélange (340) de terre argileuse excavée, d'agent défloculant et d'agent d'activation selon la composition sélectionnée.

8. Procédé (300) de préparation selon la revendication 7 comportant en outre :

   - une étape de mesure (350) de propriété physico-chimique ou mécaniques du matériau de construction en formation, pendant l'étape de mélange,
   - une étape de comparaison (360) des valeurs mesurées à des valeurs prédéterminées de propriété physico-

chimique ou mécanique du matériau de construction en formation, et

- lorsque les valeurs mesurées différent (360-n) des valeurs prédéterminées de propriété physicochimique ou mécanique du matériau de construction en formation, une étape d'ajout (370) d'au moins un ingrédient complémentaire.

9. Système (400) de préparation d'un matériau de construction comportant une terre argileuse excavée, ledit système comportant :

- au moins un contenant (410) comportant une terre argileuse excavée,
- au moins un contenant (420) comportant un agent défloculant,
- au moins un contenant (430) comportant un agent d'activation,
- un dispositif (450) de mélange, avec des moyens de transports automatisés entre les contenants (410, 420, 430) et le dispositif (450) de mélange,
- un moyen de mesure (460) d'au moins une propriété physicochimique de la terre argileuse excavée,
- Un moyen de calcul (470) apte à mettre en oeuvre un programme informatique configuré pour réaliser :

- Une étape d'obtention d'une valeur mesurée d'au moins une propriété physicochimique de la terre argileuse excavée ; et
- Une étape de détermination d'une quantité d'agent défloculant et d'une quantité d'agent d'activation adaptées à la terre argileuse excavée sur la base d'une comparaison de la ou des valeurs mesurées à des valeurs de référence.

- Un module de contrôle (480) configuré pour générer des signaux de sortie à destination des moyens de transports automatisés de façon transporter des quantités d'agent défloculant et d'agent d'activation déterminées vers le dispositif (450) de mélange.

10. Système (400) de préparation d'un matériau de construction selon la revendication 9, **caractérisé en ce qu'**il comporte un moyen de communication configuré pour recevoir des données sur une quantité d'agent défloculant et une quantité d'agent d'activation déterminées, adaptées à la terre argileuse excavée ; le module de contrôle (480) étant configuré pour générer des signaux de sortie à destination des moyens de transports automatisés de façon transporter les quantités d'agent défloculant et d'agent d'activation déterminées vers le dispositif (450) de mélange.

11. Système (400) de préparation d'un matériau de construction selon l'une des revendications 9 ou 10, **caractérisé en ce que** ledit agent défloculant est sélectionné parmi :

- un surfactant non-ionique tel qu'un éther de polyoxyéthylène, ou
- un agent anionique par exemple sélectionné parmi : des sulfonates d'alkylaryle, des aminoalcool, des carbonates, des acides gras, des humates, des acides carboxyliques, des lignosulfonates, des polyacrylates, des phosphates ou polyphosphates tels que du hexamétaphosphate de sodium, du tripolyphosphate de sodium, de l'orthophosphate de sodium, des carboxyméthylcelluloses, ou
- une amine sélectionnée par exemple parmi : 2-amino-2-methyl-1-propanol ; mono-, di- or triethanolamine ; des isopropanolamines et des N-alkylated ethanolamines.

12. Système (400) de préparation d'un matériau de construction selon l'une quelconque des revendications 9 à 11, **caractérisé en ce que** le moyen de mesure (460) est un pH-mètre, un diffractomètre à rayon X, un conductimètre, un microscope électronique, un porosimètre au mercure, un spectrofluoromètre, un ICP-MS, une HPLC-MS, une GC-MS, de la mesure de la surface spécifique par la méthode BET, un granulomètre, ou un rhéomètre.

13. Système (400) de préparation d'un matériau de construction selon l'une quelconque des revendications 9 à 12, **caractérisé en ce qu'**il comporte un broyeur de terre.

14. Système (400) de préparation d'un matériau de construction selon l'une quelconque des revendications 9 à 13, **caractérisé en ce qu'**il comporte un cribleur, de préférence permettant d'isoler les cailloux de diamètre supérieur à 10 cm, ou un malaxeur planétaire.

15. Système (400) de préparation d'un matériau de construction selon l'une quelconque des revendications 9 à 14, **caractérisé en ce qu'**il comporte un moyen de tri permettant d'isoler les particules de diamètre inférieur à 50 $\mu$m.

100

110 — Traitement préalable de la terre argileuse excavée

120 — Mesure d'au moins une propriété physicochimique d'une terre argileuse excavée

130 — Réception d'une valeur mesurée d'au moins une propriété physicochimique d'une terre argileuse excavée

140 — Réception d'une valeur de propriété mécanique souhaitée du liant de construction

150 — Génération d'une pluralité de combinaisons de valeurs de quantité d'agent défloculant et d'agent d'activation

160 — Détermination d'au moins une valeur de propriété physicochimique ou mécanique du liant de construction en formation

170 — Sélection d'une quantité d'agent défloculant et d'une quantité d'agent d'activation adaptées à la terre argileuse excavée sur la base d'une comparaison de la ou des valeurs mesurées à des valeurs de référence

171 — Exclusion des quantités d'agent défloculant et d'agent d'activation qui ne permettront pas au liant de construction de présenter la valeur de propriété mécanique souhaitée

172 — Détermination d'une quantité d'additif à intégrer à la composition de liant de construction.

173 — Détermination d'une quantité de charge à intégrer à la formulation de façon à former un béton de site

**FIG. 1**

**200**

210 — Traitement préalable d'un échantillon de terre argileuse

220 — Mesure d'au moins une propriété physicochimique d'une terre argileuse

230 — Réception d'une valeur mesurée d'au moins une propriété physicochimique d'une terre argileuse excavée

240 — Réception d'une quantité d'agent défloculant et d'une quantité d'agent d'activation qui une fois ajoutées à la terre argileuse excavée de façon à former un liant de construction

250 — Formation d'un liant de construction selon les valeurs réceptionnées

260 — Réception d'une valeur mesurée d'au moins une propriété mécanique du liant de construction formé

270 — Création d'une corrélation entre les valeurs mesurées réceptionnées de façon à calibrer un algorithme de calcul

280 — Sauvegarde de la corrélation créée

290 — Mise à jour de l'algorithme de calcul par répétition des étapes précédentes

**FIG. 2**

300

310 — Mesure d'au moins une propriété physicochimique de la terre argileuse excavée

100 — Sélection de la composition d'un liant de construction comportant une terre argileuse excavée selon l'invention

330 — Etape de criblage de la terre argileuse excavée

340 — Mélange de terre argileuse excavée, d'agent de défloculation et d'agent d'activation selon une composition sélectionnée

350 — Mesure de propriété physico-chimique ou mécaniques du liant de construction en formation, pendant l'étape de mélange

360 — Comparaison des valeurs mesurées à des valeurs prédéterminées de propriété physicochimique ou mécanique du liant de construction en formation

370 — Ajout d'au moins un ingrédient complémentaire lorsque les valeurs mesurées différent des valeurs prédéterminées de propriété physicochimique ou mécanique du liant de construction en formation

FIG. 3

FIG. 4

320

↓

330

↓

335

↓

340

**FIG. 5**

400

410

460

470

480

420

430

440

450

**FIG. 6**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2751911
- EP 2296854 A
- DE 19530964
- DE 354069
- WO 03089383 A
- FR 3016376
- FR 3034094